(19) Europäisches Patentamt
European Patent Office
Office européen des brevets

(11) **EP 3 380 759 B1**

(12) **EUROPÄISCHE PATENTSCHRIFT**

(45) Veröffentlichungstag und Bekanntmachung des Hinweises auf die Patenterteilung:
**14.10.2020 Patentblatt 2020/42**

(21) Anmeldenummer: **16813217.3**

(22) Anmeldetag: **24.11.2016**

(51) Int Cl.:
*F16H 61/686* (2006.01)     *F16H 3/72* (2006.01)
*F16H 61/04* (2006.01)     *F16H 61/688* (2006.01)

(86) Internationale Anmeldenummer:
**PCT/DE2016/100545**

(87) Internationale Veröffentlichungsnummer:
**WO 2017/088856 (01.06.2017 Gazette 2017/22)**

(54) **VERFAHREN ZUR LASTSCHALTUNG VON HYBRIDISIERTEN AUTOMATGETRIEBEN DURCH EINE DOPPELKUPPLUNGSSTRATEGIE MIT TRANSFORMATION**

METHOD FOR POWER SHIFTING IN HYBRID AUTOMATIC TRANSMISSIONS BY MEANS OF A DUAL-CLUTCH STRATEGY INVOLVING TRANSFORMATION

PROCÉDÉ DE COMMANDE SOUS CHARGE DE BOÎTES DE VITESSES AUTOMATIQUES HYBRIDES GRÂCE À UNE STRATÉGIE DE DOUBLE EMBRAYAGE AVEC TRANSFORMATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2015   DE 102015120599**
**27.11.2015   DE 102015120601**
**16.06.2016   DE 102016111060**

(43) Veröffentlichungstag der Anmeldung:
**03.10.2018   Patentblatt 2018/40**

(73) Patentinhaber: **IAV GmbH**
**Ingenieurgesellschaft Auto und Verkehr**
**10587 Berlin (DE)**

(72) Erfinder:
• **LAMPE, Alexander**
**13353 Berlin (DE)**
• **METTIN, Uwe**
**12683 Berlin (DE)**

(74) Vertreter: **Fukala, Georg**
**IAV GmbH**
**Ingenieurgesellschaft Auto und Verkehr**
**Entwicklungszentrum Chemnitz/Stollberg**
**Auer Straße 54**
**09366 Stollberg (DE)**

(56) Entgegenhaltungen:
**EP-A2- 1 744 083     US-A1- 2012 115 676**

## Beschreibung

Die Erfindung betrifft ein Verfahren zur Lastschaltung von Automatgetrieben, insbesondere von hybridisierten Automatgetrieben, beliebiger Topologie, das durch eine generische Transformation der Wirkzusammenhänge realer Getriebegrößen zu virtuellen Größen eines Doppelkupplungsgetriebes gekennzeichnet ist, sodass ein Doppelkupplungslastschaltkern mit typischen Basisschaltungen Anwendung finden kann.
In Stufen lastschaltfähige Automatikgetriebe kann man in zwei wesentliche Typen klassifizieren:

a) konventionelle Automatgetriebe (AT, auch Wandlergetriebe, im Folgenden einfach Automatgetriebe genannt), bei denen mit unterschiedlichen Topologien mehrere Planetenradsätze so angeordnet sind, dass durch Kupplungen und Bremsen mit einer individuellen Schaltlogik entsprechende Festübersetzungen realisiert werden können und

b) Doppelkupplungsgetriebe (DCT, dual-clutch transmission), bei denen das Antriebsmoment mit jeweils einer Kupplung auf zwei parallele unabhängige Getriebeeingangswellen bzw. Getriebeantriebswellen verteilt wird, die mit geeigneten Zahnradpaarungen zur Ausgangswelle jeweils ungerade bzw. gerade Gänge realisieren.

Beide Getriebetypen lassen sich hybridisieren, also mit einer weiteren Antriebseinheit versehen. Diese wirkt auf ein bestimmtes Getriebeelement bzw. einen oder mehrere Leistungspfade des leistungsverzweigten, hybridisierten Automatgetriebe ein und bewirkt ein zusätzliches Antriebsmoment. Bei einem Automatgetriebe mit einem oder mehreren Planetenradsätzen und wenigstens einer E-Maschine als weiterer Antrieb kann dabei aufgrund der Leistungsverzweigung eine stufenlos variable Getriebeübersetzung (electronic continuously variable transmission - eCVT) realisiert werden.
Die Unterscheidung zwischen Kupplungen und Bremsen bei Automatgetrieben liegt an den verschiedenen Verbindungsprinzipien. Kupplungen verbinden zwei bewegliche Elemente, beispielsweise zwei bewegliche Wellen, und Bremsen verbinden ein bewegliches Element mit einem starren Element, beispielsweise eine Welle mit einem Gehäuse. Da daraus steuerungs- bzw. regelungstechnisch kein wesentlicher Unterschied erwächst, werden im Folgenden in diesem Zusammenhang (Getriebekontext) unter Kupplungen sowohl Kupplungen, welche zwei Wellen drehfest miteinander verbinden können, als auch Bremsen, welche drehende Bauteile kraftschlüssig mit einem Getriebegehäuse verbinden können, verstanden.

Automatgetriebe sind üblicher Weise mit einem hydrodynamischen Wandler zum Anfahren ausgestattet, der in manchen Ausführungen durch eine Reibkupplung ersetzt ist. Für Schaltvorgänge der nachgelagerten Getriebestufen ist das verbaute Anfahrelement unerheblich.

Automatgetriebe sowie Doppelkupplungsgetriebe sind lastschaltfähig, sodass bei Gangwechseln keine Unterbrechung des Kraftflusses von Getriebeeingang zum Getriebeausgang zugelassen wird. Außerdem sind die Schaltzeit klein sowie das Abtriebsmoment glatt, heißt abtriebsneutral, zu halten. Allerdings ist beim Automatgetriebe, im Gegensatz zum Doppelkupplungsgetriebe, während des Schaltvorgangs der Getriebeeingang aufgrund der Leistungsverzweigung nicht immer vom Getriebeausgang entkoppelt und zudem gehen die Kupplungsmomente nicht mit Wirkfaktor eins in die Bewegungsgleichung ein.

Alle Topologien gestufter Automatikgetriebe, die nicht einem Doppelkupplungsgetriebe mit zwei unabhängigen Teilgetrieben entsprechen, werden im Folgenden dem Typ Automatgetriebe (AT) zugeordnet. Dazu zählen auch oben genannte Hybridgetriebe, bei denen eine oder mehrere E-Maschinen in ein Planetengetriebe integriert sind.

## Stand der Technik

Die Offenlegungsschrift DE 10 2007 033 497 A1 betrifft ein Automatikgetriebe mit mehreren Reibeingriffselementen und ein Verfahren zum Steuern eines derartigen Automatikgetriebes, wobei speziell das Trägheitsdrehmoment des Antriebes, das infolge einer Änderung eines Drehzustands während eines Gangschaltungsvorgangs wirkt, ausgeschaltet wird. Dazu ist die Steuerung derart ausgebildet, dass sie ein erstes und ein zweites Reibeingriffselement so steuert, dass zumindest ein erster Abschnitt eines Trägheitsmoments ausgeglichen wird, das sich infolge des Gangschaltvorgangs ergibt, und dass sie eine Antriebseinheit so steuert, dass ein zweiter Abschnitt des Trägheitsmoments ausgeglichen wird. Die Steuerung kann so ausgebildet sein, dass sie das erste und das zweite Reibeingriffselement so steuert, dass das Trägheitsdrehmoment mit Ausnahme des zweiten Anteils ausgeglichen wird, einen maximal möglichen Wert des zweiten Anteils des Trägheitsdrehmoments bestimmt und dann, wenn der maximal mögliche Wert gleich einem Wert ungleich Null ist, ein Verteilungsverhältnis bestimmt, das kleiner als Eins und größer als Null ist, und den zweiten Anteil des Trägheitsdrehmoments dadurch bestimmt, dass das Trägheitsdrehmoment mit dem Verteilungsverhältnis multipliziert wird. Das Dokument beschreibt den Schaltvorgang eines Viergang-Automatgetriebes durch einen Prozess, der den Schaltvorgang eines Doppelkupplungsgetriebes umfasst. Allerdings wird weder die nichttriviale Kopplung von Getriebeeingang und -ausgang durch Planetenradsätze berücksichtigt, noch werden die erforderlichen Transformationen betrachtet. Ausgehend von der Aufgabe der DE 10 2007 033 497 A1, einen schnellen und glatten Schaltvorgang zu erzielen, ist die Anwendung der Bewegungsgleichungen eines Doppelkupplungsgetriebes auf ein Viergang-Automatgetriebe nicht ausreichend, weil der durch Kopplung zwischen An- und Abtriebswelle hervorgerufenen Beeinflussung des Abtriebsmoments des AT während der Drehzahlüberführung nicht Rechnung getragen wird. Zudem ist die vorgeschlagene Berechnung von Kupplungseingriffen zur Drehzahlformung nur anwendbar für den unbeschleunigten Fahrzeugzustand, was bei Doppelkupplungsgetrieben für Schub-Hochschaltungen mit einem Abtriebsgradienten nahe Null bekannt ist. Eine generische Schaltstrategie beliebiger Automatgetriebe anhand ausgereifter Methoden zur Lastübernahme und Drehzahlüberführung in beliebigen, typischerweise hochdynamischen Fahrzuständen ist dadurch weder möglich noch angeregt.

Die Offenlegungsschrift DE 10 2007 032 789 A1 beschreibt ein Verfahren zur Schub-Rückschaltung eines Automatikgetriebes, bei dem eine Rotationsgeschwindigkeitsdifferenz zwischen einer Eingangs- und einer Ausgangsseite einer Kupplung und ein Aufteilungsverhältnis einer Gesamtdrehmomentkapazität an eine erste und eine zweite Kupplung festgelegt und aus diesen beiden Steuervariablen eine integrierte oder zusammengelegte Steuervariable erzeugt wird. Auf Basis dieser integrierten Steuervariablen ist es möglich, eine sequentielle Schaltsteuerung für Lastübernahme und Drehzahlüberführung zu realisieren, die auf eine Vielzahl von Automatgetrieben anwendbar ist. Diese spezifische Schaltsteuerung ermöglicht es nicht, eine vorhandene Schaltstrategie auf ein beliebiges Automatgetriebe zu überführen. Außerdem wird auch hier die nichttriviale Kopplung von Getriebeeingang und -ausgang durch Planetenradsätze nicht explizit in Bewegungsgleichungen berücksichtigt, sodass die beschriebene Schaltsteuerung lediglich eine Grundlage für automatikgetriebeindividuell zu konfigurierende Schaltsteuerungen bildet.

Die Offenlegungsschrift DE 101 53 722 A1 offenbart ein Verfahren zur Schaltung eines Lastschaltgetriebes, bei dem zeitlich überschnitten eine kommende, dem neuen Gang zugeordnete Kupplungseinheit geschlossen und eine gehende, dem alten Gang zugeordnete Kupplungseinheit geöffnet wird, wobei die Kupplungseinheiten als dauerschlupfgeregelte Nasskupplungen ausgebildet sind, das Schließen der kommenden Kupplungseinheit in etwa bis auf einen der Kupplungskapazität der gehenden Kupplungseinheit entsprechenden Arbeitsdruck erfolgt und dem Schließen der kommenden Kupplungseinheit eine mit einem Befüllende abgeschlossene Befüllung mit einem erhöhten, der Größenordnung der Kupplungskapazität der gehenden Kupplungseinheit entsprechenden Befülldruck vorausgeht. Dieser Vorgang wird auch als Kupplungsvorsteuerung bezeichnet.

Die Patentschrift DE 100 14 879 B4 beschreibt ein Verfahren zur Steuerung eines Doppelkupplungsgetriebes mit zwei Eingangswellen, wobei der ersten Eingangswelle eine erste Reibkupplung und der zweiten Eingangswelle eine zweite Reibkupplung zugeordnet ist und mit Hilfe jeder Reibkupplung jeweils ein Antriebsstrang realisierbar ist, wobei von den Reibkupplungen ein Antriebsmoment einer Antriebseinheit von der jeweiligen Eingangswelle über den jeweiligen Antriebsstrang auf die Abtriebswelle übertragen wird, wobei das Getriebe mindestens zwei Gangstufen aufweist, die erste Gangstufe zumindest durch ein erstes Zahnradpaar und die zweite Gangstufe zumindest durch ein zweites Zahnradpaar gebildet ist und wobei der Gangstufenwechsel durch das Ausrücken und/oder Einrücken mindestens einer mit dem ersten oder zweiten Zahnradpaar zumindest teilweise in Eingriff bringbaren Schiebemuffe realisiert wird und wobei die Drehzahl der Antriebseinheit in Abhängigkeit der einzulegenden Gangstufe verändert wird. Der Steueraufwand ist dadurch vereinfacht, dass die Steuerung der Drehzahl der Antriebseinheit während des Gangstufenwechsels mit Hilfe mindestens einer der beiden Reibkupplungen erfolgt. Ausgenommen der Schub-Hochschaltung, erfolgt üblicherweise die Drehzahlsteuerung der Antriebseinheit durch die Steuereinheit der Antriebseinheit. Dies vereinfacht die Schaltsteuerung eines Doppelkupplungsgetriebes dahingehend, dass gerade kein Kompensationseingriff durch Verspannung der Reibkupplungen, wie in der DE 100 14 879 B4 beschrieben, erfolgen muss.

Die Patentschrift DE 196 39 376 C1 betrifft eine automatisch gesteuerte Kupplung im Antriebsstrang eines Kraftfahrzeugs. Im Schließzustand arbeitet die Kupplung mit Überanpressung, so dass das von der Kupplung übertragbare Moment ein vorgegebenes Maß größer ist als das vom Motor erzeugte Moment. Bei tiefen Außentemperaturen wird das Maß der Überanpressung herabgesetzt, um die Stellwege der Kupplung zu verkürzen und den Energiebedarf bei der Kupplungsbetätigung zu vermindern. Dadurch kann eine bei tiefen Temperaturen zunehmende Schwergängigkeit eines Stellaggregates zur Kupplungsbetätigung kompensiert werden. Diese spezielle Ausgestaltung einer allgemein bekannten Überanpressungssteuerung bezieht sich auf eine Kupplung. Eine Skalierung auf mehrere Kupplungen ist nicht offenbart.

Das europäische Patent EP 1 497 576 B1 beschreibt ein Steuerverfahren für Automatikgetriebe, welches auf einem Antriebsstrangmodell basiert, das die zur Steuerung eines Schaltvorgangs relevanten Bedingungen auf verallgemeinerte Weise beschreibt. Zur Durchführung des Schaltvorgangs in dem Automatikgetriebe, welches zur Übertragung eines Moments zwischen zwei Trägheitskomponenten bei verschiedenen Übersetzungsverhältnissen ausgebildet ist, sind folgende Schritte vorgesehen, wobei die Trägheitskomponenten mindestens eine Antriebseinheit bzw. eine Last repräsentieren und das Getriebe eine Antriebswelle und eine Abtriebswelle mit einem dazwischen vorgesehenen ersten Kraftübertragungsweg und einem zweiten Kraftübertragungsweg umfasst, wobei die Kraftübertragungswege mit einer direkten Kupplung mit einer einstellbaren Drehmomentübertragungsleistung $T_H$ bzw. einer indirekten Kupplung mit einer einstellbaren Drehmomentübertragungsleistung $T_L$ versehen sind. Es wird ein Zahnradsat-

zeingangsdrehmoment $T_{in}$ bestimmt, das durch das Getriebe in Richtung von der Antriebswelle zu der Abtriebswelle übertragen werden soll. Es werden die Drehmomentübertragungsleistungen $T_H$ und $T_L$ in Abhängigkeit von dem zu übertragenden Zahnradsatzeingangsdrehmoment $T_{in}$ derart gesteuert, dass a) wenn $T_{in} > 0$, dann $T_H = T_{in}$ und $T_L = 0$ oder b) wenn $T_{in} < 0$, dann $T_H = 0$ und $T_L = T_{in}$. Es wird an einem vereinfachten Modell gezeigt, dass durch eine Funktion des Übersetzungsverhältnisses in Abhängigkeit der Zeit die Drehzahlüberführung gestaltet werden kann. Allerdings ist die Drehzahlüberführung unkompensiert am Abtrieb spürbar.

Die Offenlegungsschrift DE 101 38 998 A1 bezieht sich auf eine Vorrichtung und ein Verfahren zum Steuern eines Schaltablaufs bei einem lastschaltbaren Getriebe in einem Kraftfahrzeug. Um einen komfortablen Betrieb des lastschaltbaren Getriebes zu gewährleisten, ist vorgesehen, dass mittels der Vorrichtung eine Drehzahl der Getriebeeingangswelle und ein Drehmoment an der Getriebeausgangswelle einstellbar sind. Nach dem entsprechenden Verfahren ist es vorgesehen, dass in einer ersten Phase das Drehmoment an der Getriebeausgangswelle auf einen ersten Drehmomentzielwert eingestellt wird und in einer zweiten Phase die Drehzahl der Getriebeeingangswelle auf einen Drehzahlzielwert und gleichzeitig das Drehmoment der Getriebeausgangswelle auf einen zweiten Drehmomentzielwert eingestellt wird. Unter Kupplungen werden in diesem Zusammenhang sowohl Kupplungen, welche zwei Wellen drehfest miteinander verbinden können, als auch Bremsen, welche drehende Bauteile kraftschlüssig mit einem Getriebegehäuse verbinden können, verstanden.

Die Patentschrift EP 1 108 164 B4 beschreibt ein Verfahren zur Steuerung und Regelung der Kupplung während drei Fahrzuständen, wobei ausschließlich ein einziger Regelkreis verwendet wird. Die Regelgröße entspricht dem Istwert der Differenzdrehzahl der Kupplung. Die drei Fahrzustände entsprechen hierbei einem Anfahrvorgang als erstem Zustand, dem Fahren mit konstanter Übersetzung als zweitem Zustand und einem dritten Zustand, der dann vorliegt, wenn entweder eine Lastschaltung oder eine Verstellung der Übersetzung von einer ersten in eine zweite Übersetzungsstufe eines Automatikgetriebes initiiert wird, wobei die Lastschaltung vorteilhafterweise in einem automatisch lastschaltbaren Stufengetriebe und die Verstellung der Übersetzung in einem automatischen Stufengetriebe mit Zugkraftunterbrechung beim Schalten für ein Kraftfahrzeug verwendet wird. Bei einer Lastschaltung im Sinne einer Überschneidungsschaltung bestimmt ein eigener Regelkreis, nachfolgend als zweiter Regelkreis bezeichnet, das Verhalten der zu- und abschaltenden Kupplungen. Es wird vorgeschlagen, dass der erste und zweite Regelkreis über ein Entkopplungsnetzwerk miteinander verbunden sind, wobei das Entkopplungsnetzwerk einen ersten und zweiten Signalweg aufweist. Über das Entkopplungsnetzwerk wird somit der Vorteil erzielt, dass die beiden Regler sich in ihrer Wirkung nicht gegenseitig beeinflussen.

Die Offenlegungsschrift DE 10 2008 008 460 A1 betrifft ein Verfahren zum Steuern der Kupplungen eines Doppelkupplungsgetriebes bei einem Gangwechsel von einem Istgang in einen Zielgang, bei dem während des Gangwechsels eine Drehmomentübergabe von der lastabgebenden (gehenden) Kupplung zur lastannehmenden (kommenden) Kupplung erfolgt, enthält die Schritte: Erhöhen des übertragbaren Drehmoments der kommenden Kupplung bis auf das augenblickliche Antriebsmoment; Abbauen des übertragbaren Drehmoments der gehenden Kupplung; wobei während des Gangwechsels das Summendrehmoment aus den übertragenen Drehmomenten der gehenden Kupplung und der kommenden Kupplung zumindest zeitweise größer als das augenblickliche Antriebsmoment ist und dabei die kommende Kupplung ein höheres übertragbares Drehmoment aufweist als es einem Grenzdrehmoment entspricht, bei dem das Drehmoment der kommenden Kupplung gleichmäßig vom Ausgangszustand der Drehmomentübergabe bis zu einem Endzustand der Drehmomentübergabe erhöht wird.

Die nicht vorveröffentlichte Patentanmeldung DE 10 2015 120 599.8 offenbart ein Verfahren zur Lastschaltung von Automatgetrieben durch eine Doppelkupplungsstrategie mit Transformation.

Die internationale Anmeldung WO 2009/024162 A1 offenbart ein Hybridantriebssystem mit einer ersten Antriebsmaschine, insbesondere einer Verbrennungskraftmaschine, und zwei weiteren Antriebsmaschinen, insbesondere zwei elektrische Maschinen, für ein Kraftfahrzeug. Es umfasst zwei Gangschaltteilgetriebe mit je einer Eingangswelle und einer Abtriebswelle, wobei die erste Antriebsmaschine, die erste Eingangswelle und die zweite Eingangswelle jeweils mit einem der Glieder eines Planetengetriebes antriebsverbunden sind und die weiteren Antriebsmaschinen jeweils mit einer der Eingangswellen starr antriebsverbunden sind. Eine günstige Zuordnung der drei Antriebsmaschinen zu den Gliedern des Planetengetriebes liegt darin, dass die erste Antriebsmaschine mit dem Planetenträger, die erste weitere Antriebsmaschine mit dem Hohlrad und die zweite weitere Antriebsmaschine mit dem Sonnenrad des Planetengetriebes starr gekoppelt sind. Um die Möglichkeit der Getriebeanordnung mit geringem Energieaufwand auszuschöpfen, ist vorgesehen, dass Feststellbremsen für die mit den Eingangswellen verbundenen Glieder des Planetenträgergetriebes, insbesondere für das Hohlrad und das Sonnenrad, vorgesehen sind. Anstelle der genannten Festellbremsen können auch die weiteren Antriebsmaschinen selber zur Erzeugung eines Haltemomentes für die entsprechenden Glieder des Planetengetriebes eingesetzt werden. Durch eine sinnvolle Reihenfolge des Öffnens und Schließens der beiden Feststellbremsen an den beiden Eingangswellen sowie des Bestromens und Abschaltens der beiden weiteren Antriebsmaschinen sowie eine daran angepasste Reihenfolge der Betätigung der Schalteinheiten der verschiedenen Gänge ist ein zugkraftfreies Schalten zwischen den Gängen möglich.

Die EP 1 744 083 A offenbart ein Verfahren zur Schaltsteuerung eines Automatgetriebes; das Verfahren umfasst das Vorsteuern eines ersten gehenden und eines zweiten kommenden Reibelementes in Abhängigkeit der Drehzahldifferenz am An- und Abtrieb des ersten Reibelementes sowie eines Verteilungsverhältnisses des zu übertragenden Antriebsmoments auf beide Reibelemente sowie die Anwendung dieser Strategie zum Schalten mehrerer Gangwechselkombinationen.

### Aufgabe der Erfindung

Die Aufgabe der vorliegenden Erfindung ist es, ein Verfahren zur abtriebsneutralen Lastschaltung von hybridisierten Automatgetrieben beliebiger Topologie anzugeben, bei dem ausgereifte Methoden zur Lastübernahme und Drehzahlüberführung von Doppelkupplungsgetrieben angewendet werden können.

### Offenbarung der Erfindung

Die Aufgabe wird durch ein Verfahren zur Lastschaltung von hybridisierten Automatgetrieben (AT) mit einer beliebigen Anzahl Gangstufen und einer Anzahl n Kupplungen und mit einer ersten von p Antriebseinheiten und wenigstens einer weiteren von p Antriebseinheiten anhand einer generischen Transformation realer Getriebegrößen des hybridisierten Automatgetriebes in virtuelle Größen eines Doppelkupplungsgetriebes (DCT) mit dazugehörigen doppelkupplungsgetriebespezifischen Basisschaltungen entsprechend dem unabhängigen Anspruch 1 gelöst.

Die erste von p Antriebseinheiten ist vorzugsweise eine Verbrennungskraftmaschine. Bei der wenigstens einen weiteren der p Antriebsmaschinen handelt es sich bevorzugt um eine Elektrische Maschine (E-Maschine), beispielsweise eine Synchron- oder Asynchronmaschine. Die Verwendung einer E-Maschine ermöglicht vorteilhafterweise die Einsparung von Stellenergie bei Gangwechseln oder die Aufhebung oder zumindest die Aufweitung von Stellgrößenbeschränkungen des Automatgetriebes. Weiterhin ist es dadurch möglich, Klauenkupplungen anstelle von Reibungskupplungen zumindest in einigen Leistungspfaden zu verwenden, was den Gesamtwirkungsgrad des Getriebes weiter erhöht.

Das erfindungsgemäße Verfahren besteht darin, dass durch eine Vorwärtstransformation wichtige Strategiegrößen für den DCT-Lastschaltkern bereitgestellt und durch eine Rücktransformation tatsächliche Stellgrößen mit entsprechenden Wirkfaktoren für das hybridisierte Automatgetriebe generiert werden, inklusive einer Drehmomentsteuerung der wenigstens einen weiteren Antriebseinheit und einer Überanpressungssteuerung aller relevanten Kupplungen. Der DCT-Lastschaltkern ist dabei die Schaltlogik, Schaltablaufsteuerung oder Getriebesteuerung, die die Gangwechsel entsprechend einer Basisschaltung steuert. Der Lastschaltkern eines Doppelkupplungsgetriebes weist wenigstens eine, vorzugsweise mehrere lastschaltfähige Basisschaltungen auf. Dazu zählen eine Zug-Hochschaltung, eine Zug-Rückschaltung, eine Schub-Hochschaltung und eine Schub-Rückschaltung. Der Unterschied zwischen Zug und Schub besteht darin, dass unter Zug das Antriebsmoment definitionsgemäß positiv und unter Schub definitionsgemäß negativ ist. Ein positives Antriebsmoment in diesem Sinne bedeutet, dass eine Antriebseinheit ein Antriebsdrehmoment an die Antriebsräder liefert, wohingegen bei Schub ein Bremsdrehmoment, auch Schleppmoment genannt, von den Antriebsrädern an die Antriebseinheit übertragen wird. Ist im Folgenden von einem DCT-Lastschaltkern die Rede, so ist eine Schaltlogik entsprechend einer oder mehrerer Basisschaltungen gemeint, welche auf einem entsprechenden Steuergerät abläuft.

Eine Lastschaltung untergliedert sich in wenigstens zwei wesentliche Phasen, die Lastübernahmephase und die Drehzahlüberführungsphase, wobei die Reihenfolge vom Schalttyp, also der anzuwendenden Basisschaltung abhängt. Während der Drehzahlüberführungsphase findet wenigstens ein Eingriff durch eine Antriebseinheit und/oder eine Kupplung statt, um die Drehzahl zu überführen. Um diese Drehzahlüberführung abtriebsneutral, also durch konstant Halten des Abtriebsmomentes bzw. des Abtriebsgradienten, zu gestalten, findet ein zusätzlicher Kompensationseingriff an wenigstens einer Kupplung und/oder der wenigstens einen weiteren Antriebseinheit statt, der ein Rückkopplungsmoment, verursacht durch eine Kopplung zwischen An- und Abtrieb, ausgleicht, falls vorhanden.

Die Transformationen sind generisch, sodass die AT-Topologie und die Anzahl der Schaltstufen beliebig komplex sein können. Dabei werden die tatsächlich vorliegenden, also realen Getriebegrößen des hybridisierten Automatgetriebes in virtuelle Größen, also nur für die notwendigen Berechnungen der Lastschaltung vorliegende Größen transformiert, also umgerechnet.

Es wird ein Prinzip der kommenden, gehenden und bleibenden Kupplungen angewendet, wobei die wenigstens eine weitere Antriebseinheit ebenfalls als kupplungsäquivalente Drehmomentquelle dem Prinzip kommend, gehend und bleibend unterworfen ist, weil sich aus mechanischer Sicht die weitere Antriebseinheit, z. B. E-Maschine, wie eine Kupplung als Drehmomentquelle darstellen lässt. Mit der E-Maschine können positive und negative Drehmomente aufgeprägt werden, wohingegen die Wirkrichtung eines Kupplungsdrehmomentes alleinig durch den Kupplungsschlupf bestimmt wird. Die E-Maschine kann somit steuerungstechnisch wie eine Kupplung behandelt werden wobei die Einschränkung bzgl. der Wirkrichtung entfällt.

Kommende Kupplungen sind lastannehmende Kupplungen, die vor dem Gangwechsel geöffnet und nach dem Gangwechsel geschlossen sind, also vor dem Gangwechsel kein Drehmoment und nach dem Gangwechsel ein Drehmoment vom Betrag üblicherweise größer null übertragen. Gehende Kupplungen sind entsprechend lastabgebende Kupplungen, die vor dem Gangwechsel geschlossen und danach geöffnet sind. Kommende und gehende Kupplungen sind direkt am Schaltvorgang beteiligt (aktive Kupplungen). Bleibende Kupplungen sind alle während eines Schaltvorgangs geschlossen bzw. geschlossen bleibende Kupplungen. Diese übertragen auch während eines Schaltvorgangs ein Drehmoment vom Antrieb zum Abtrieb oder umgekehrt. Jedoch ändert sich ihr Status während eines Schaltvorgangs nicht, weil sie nicht direkt am Schaltvorgang beteiligt sind (nicht aktive Kupplungen). Auch offen bleibende Kupplungen können im Prinzip als bleibende Kupplungen angesehen werden. Aus Gründen der Klarheit und Eindeutigkeit werden offen bleibende Kupplungen, also Kupplungen, die vor und nach dem Schaltvorgang geöffnet bzw. nicht in Eingriff sind, als offene Kupplungen bezeichnet. Eine Kupplung gilt auch als offen, wenn sie eine Drehzahldifferenz zwischen An- und Abtriebsseite des Reibelements aufweist (sog. Schlupf) oder die gestellte Kupplungskapazität kleiner ist als das betragsmäßig wirksam zu übertragende Moment (Schnittmoment) im Falle einer kraftschlüssigen Kopplung der Ein- und Ausgangsseite des Reibelements. Die gehende Kupplung wäre damit, sobald sie zu Beginn der Drehzahlüberführungs- oder Lastübernahmephase in Schlupf gerät, eine offene Kupplung. Jedoch wird aus Gründen der Eindeutigkeit diese Kupplung bis zum vollständigen Beenden des Gangwechsels als gehende Kupplung bezeichnet. Eine Ausnahme kann vorliegen, wenn während des Gangwechsels eine neue Ganganforderung vorliegt, z. B. bei Schaltabbruch. Im Allgemeinen sind offene Kupplungen nicht am Schaltvorgang beteiligt (nicht aktive Kupplungen). Da die Kupplungsbetätigung meist hydraulisch erfolgt und ein definiertes Einrücken nur möglich ist, wenn die Stellzylinder mit ausreichend hydraulischem Druck beaufschlagt und gefüllt sind, können offene Kupplungen, bei denen dies nicht der Fall ist, nicht ohne gewisse Vorlaufzeit betätigt werden. Jedoch kann eine Situation vorliegen, in der die Kupplung zu Beginn und zum Ende des Schaltvorgangs offen ist und während des Schaltvorgangs in Eingriff gebracht wird. Dies erfordert, wie oben genannt, eine gewisse Vorlaufzeit. Bei bekannten Topologien von Automatgetrieben existieren in jedem individuellen Gangwechselvorgang mindestens eine, oft mehrere offene Kupplungen. Daher ist im Folgenden von mindestens einer Kupplung die Rede. Dabei wird die Möglichkeit, keine offene Kupplung während eines Gangwechselvorgangs vorzufinden, explizit eingeschlossen, weil diese Möglichkeit vom erfindungsgemäßen Verfahren abgedeckt ist, obwohl es in der Praxis eher selten vorzufinden ist.

Mit einem hybridisierten Automatgetriebe sind mehrere Betriebsarten darstellbar, z. B. elektrisches Fahren, verbrennungsmotorisches Fahren und hybridisiertes Fahren. Diese werden in sogenannten Parallel-Hybrid-Fahrzeugen durch meist feste Getriebeübersetzungsstufen realisiert. Neben den genannten Betriebsarten lassen sich weitere Unterarten davon darstellen, beispielsweise in Form von Mild-Hybrid-Fahrzeugen, solange wenigstens zwei Antriebseinheiten vorhanden sind. Explizit erwähnt werden soll die Betriebsart Start-Stopp-System, bei der eine Antriebseinheit, vorzugsweise die Verbrennungskraftmaschine, in geeigneten Betriebssituationen automatisch gestoppt und wieder gestartet wird. Ein Start-Stopp-System umfasst dabei abstrakt die Teilbetriebsarten Motor aus (Antriebseinheitendrehzahl Null) und Motor ein (Antriebseinheitendrehzahl größer gleich der Leerlaufdrehzahl), die ineinander zu überführen sind.

Bei entsprechender Verschaltung der Getriebekomponenten durch Kupplungen oder Bremsen kann zu den oben genannten Betriebsarten alternativ oder zusätzlich eine elektronisch gesteuert verstellbare kontinuierliche Getriebeübersetzung (eCVT - electronic continuously variable transmission, auch lediglich CVT genannt) umgesetzt werden. Je nach Betriebsart bringt die weitere Antriebseinheit dabei ein Antriebsmoment oder ein Haltemoment auf einen Leistungspfad des leistungsverzweigten, hybridisierten Automatgetriebes auf. Darüber hinaus existieren Betriebsarten, in denen dem Automatgetriebe Leistung entzogen und in anderer Energieform gespeichert (z. B. elektrische Energie über einen Generator) oder an die Umwelt abgegeben wird (z. B. Wärmeenergie). Schließlich gibt es Betriebsarten, bei denen die weitere Antriebseinheit vollständig vom Leistungsfluss entkoppelt ist. Allen Betriebsarten gemein ist ein definierter Leistungsfluss im Automatgetriebe, der sich von den anderen Betriebsarten unterscheiden kann. Bei jedem Wechsel der Betriebsart, also bei einer Verlagerung des Leistungsflusses innerhalb des leistungsverzweigten Automatgetriebes, an dem auch weitere Getriebeelemente, wie Kupplungen und Bremsen, beteiligt sein können, werden grundsätzlich die gleichen Schritte wie bei einem herkömmlichen Gangwechselvorgang durchgeführt, nämlich eine Lastüberführung und eine Drehzahlanpassung. Diese können bei gewissen Betriebsartenwechsel auch parallel oder gleichzeitig erfolgen. Aus Sicht der Gangwechsel- bzw. Getriebesteuerung kann der Wechsel einer Betriebsart des hybridisierten Automatgetriebes mit den gleichen Steuerbefehlen durchgeführt werden wie ein herkömmlicher Lastschaltvorgang. Daher wird im Weiteren unter Lastschaltvorgang bzw. Schalt- oder Gangwechselvorgang explizit auch der Wechsel der Betriebsart verstanden.

Die bereits angedeutete Überanpressungssteuerung der relevanten Kupplungen erfolgt auf der Basis von Schnittmomenten und findet vorzugsweise für alle geschlossen bleibenden Kupplungen statt. Allerdings können gehende Kupplungen zu Beginn des Schaltvorgangs genauso einer Überanpresssteuerung unterliegen wie kommende Kupplungen zum Ende des Schaltvorgangs.

Ausgereifte Schaltstrategien, also die Basisschaltungen eines Doppelkupplungsgetriebes, sind in einem DCT-Lastschaltkern hinterlegt und dienen im Rahmen eines Schaltvorgangs eines hybridisierten Automatgetriebes der Lastübernahme und der Drehzahlüberführung bei allen Fahrsituationen, wie Hochschaltung, Rückschaltung, jeweils unter Zug oder Schub, Betriebsartenwechsel sowie bei Schaltabbruch. Die Basisschaltungen im DCT-Lastschaltkern unterliegen der Applikation der Schaltvorgänge des AT, ohne dass dem Applikateur die Topologie oder die Betriebsarten des hybridisierten Automatgetriebes bekannt sein müssen. Es erfolgt dabei eine Skalierung der zu übertragenden Kupplungsmomente entsprechend der DCT-Schaltstrategie für die Stellglieder des Automatgetriebes, inklusive der weiteren Antriebseinheit. Die Schaltablaufsteuerung entsprechend der DCT-Strategie wird zur Realisierung sämtlicher Direktschaltungen der AT-Schaltlogik verwendet.

Obwohl dem Fachmann bekannt, wird angemerkt, dass, wenn im Folgenden von einem Moment die Rede ist, bis auf eine Ausnahme immer ein Drehmoment gemeint ist. Die Ausnahme bezieht sich auf Massenträgheitsmomente, welche keine Drehmomente sind, sondern eine geometrische und materialspezifische Eigenschaft von bewegten Massen, wie Wellen und Zahnrädern. Massenträgheitsmomente sind aus dem Gebiet der technischen Mechanik bekannt und können auch lediglich als Trägheiten bezeichnet werden, was zwar physikalisch ungenau ist, aber in der vorliegenden Offenbarung mit Massenträgheitsmomenten gleichgesetzt wird.

Das erfindungsgemäße Verfahren zur Lastschaltung wird gestartet durch das Auslösen eines Schaltvorgangs für eine Gangwechselpaarung (i,j) von einem Gang i mit einer Istübersetzung ($\gamma_i$) zu einem Gang j mit einer Zielübersetzung ($\gamma_j$) und der damit einhergehenden Drehzahlüberführung der primären Antriebseinheit, vorzugsweise der Kurbelwelle des Verbrennungsmotors oder der Getriebeeingangswelle, in Abhängigkeit einer vorzugsweise aus einem Fahrerwunsch abgeleiteten Zielgangvorgabe. Auch jeder Wechsel der Betriebsart kann durch eine Gangwechselpaarung mit einer Ist- und einer Zielübersetzung bzw. einem Ist- und einem Zielgang charakterisiert bzw. bestimmbar werden. So kann z. B. beim Wechsel in eine Betriebsart mit kontinuierlich verstellbarer Übersetzung von einem Istgang mit einer (festen) Istübersetzung ausgegangen werden, der in einen Zielgang mit strategisch variabler Zielübersetzung geschalten wird. Die strategische Variabilität kann als zusätzliche bzw. separate Steuerung im DCT-Lastschaltkern hinterlegt sein oder vorzugsweise unabhängig vom Schaltvorgang und damit vom DCT-Lastschaltkern vom Steuergerät des hybridisierten Automatgetriebes umgesetzt werden. Dabei wäre die Übersetzung des zuletzt eingelegten Festgangs beim Wechsel in den variablen Gang die Anfangs- bzw. Startübersetzung des variablen Gangs. Mit der variablen Übersetzung ist auch Start-Stopp, hier ebenfalls als Betriebsartenwechsel bezeichnet, darstellbar, weil eine beliebige Übersetzung und damit auch eine Drehzahl von Null der (ersten) Antriebseinheit eingestellt werden kann. Start-Stopp, also der Wechsel zwischen Motor an und Motor aus, kann dabei als Drehzahlüberführung interpretiert und von der Steuerung abtriebsneutral umgesetzt werden, wobei das von der E-Maschine zu kompensierende Relativmoment der (ersten) Antriebseinheit dem Schleppmoment des Motors entspricht und das Basismoment der (ersten) Antriebseinheit Null ist (Motor Start-Stopp im Stand). Schaltvorgänge in automatisch schaltenden Getrieben, welche beispielsweise in Kraftfahrzeugen Verwendung finden, werden üblicherweise durch die Leistungs- bzw. Dynamikanforderungen durch einen Fahrer, auch Fahrerwunsch genannt, oder ein Fahrzeugsteuersystem, im Folgenden der Übersichtlichkeit wegen ebenfalls als Fahrerwunsch bezeichnet, ausgelöst. Daraus wird eine Zielgangvorgabe abgeleitet. Betriebsartenwechsel werden üblicherweise durch ein entsprechendes Steuergeräteprogramm, genannt Hybridmanager, welches unter anderem die aktuellen Wirkungsgrade der einzelnen Antriebseinheiten sowie deren Zusammenspiel, auch durch gezielte Betriebspunktverschiebung, optimiert, ausgelöst. Es können dabei weitere Randbedingungen in das Auslösen des Schaltvorgangs eingehen, wie drehmomentbezogene Lastanforderungen oder ökonomische Kriterien. Das Auslösen eines Schaltvorgangs ist an sich bekannt und kann vom Getriebe- oder Motorsteuergerät oder einem anderen geeigneten Steuergerät bestimmt bzw. veranlasst werden. Der Schaltvorgang ist charakterisiert durch einen Wechsel von einem Gang i (Istgang) zu einem Gang j (Zielgang). Beide Gänge weisen ein unterschiedliches Übersetzungsverhältnis zwischen der Drehzahl der Antriebswelle bzw. der Getriebeeingangswelle und der Drehzahl der Abtriebswelle bzw. Getriebeausgangswelle auf und müssen nicht sequentiell geschaltet werden. Das bedeutet, dass beispielsweise auch vom 1. Gang in den 3. Gang direkt geschaltet werden kann. Wie bereits beschrieben, lässt sich aus Sicht der Gangwechsel- bzw. Getriebesteuerung auch ein CVT-Modus, also eine innerhalb bestimmter Grenzen stufenlos variable Getriebeübersetzung, als ein Gang mit einem definierten Übersetzungsverhältnis darstellen, wobei letzteres nicht durch eine Konstante sondern durch einen einer Zuordnungsvorschrift unterworfenen Zusammenhang, z. B. einem funktionalen Zusammenhang, ausgedrückt werden kann. Findet die stufenlos variable Getriebeübersetzung elektronisch gesteuert, beispielsweise mittels einer E-Maschine statt, spricht man auch vom eCVT-Modus bzw. eCVT-Gang.

Wenn der Schaltvorgang ausgelöst wurde, erfolgt im nächsten Schritt oder vorzugsweise permanent das Erfassen von Istgrößen des hybridisierten Automatgetriebes und der ersten Antriebseinheit und der wenigstens einen weiteren Antriebseinheit zur Durchführung des Verfahrens zur Lastschaltung des Automatgetriebes. Die Istgrößen sind Parameter des Fahrzeugs und des Getriebes, die den aktuellen Ist-Zustand des Fahrzeugs und des Getriebes beschreiben und gemessen, berechnet oder anderweitig erfasst werden. Die Istgrößen umfassen wenigstens eine oder vorzugsweise mehrere und besonders bevorzugt alle der folgenden Größen:

- eine Antriebs- bzw. Eingangswellendrehzahl ($\omega_{in}$) wenigstens einer Antriebs-bzw. Eingangswelle des hybridisierten Automatgetriebes, wobei als Antriebswelle der Drehmomenteingang der ersten Antriebseinheit sowie das Getriebeelement, an dem ein Drehmoment der wenigstens einen weiteren Antriebseinheit abgegeben werden kann, gilt ($\omega_{in}$ ist dabei als vektorielle Größe zu verstehen, deren einzelne Vektorelemente die Eingangs- bzw. Antriebswellendrehzahl (aus Getriebesicht) der p Antriebseinheiten (z. B. $\omega_{VKM}$) und die ebenfalls als Vektor zu verstehenden gangwechselpaarungsabhängigen Kupplungseingangsdrehzahlen $\omega_{in}^{(i,j)}$ sind),

- eine Abtriebswellendrehzahl ($\omega_{out}$) einer Abtriebswelle des hybridisierten Automatgetriebes (für $\omega_{out}$ gilt analog die Vektordarstellung der Antriebswellendrehzahl $\omega_{in}$),

- ein von der ersten Antriebseinheit zur Verfügung gestelltes und an der Antriebswelle des hybridisierten Automatgetriebes anliegendes Antriebsmoments ($T_{in}$ - bei mehreren Antriebswellen, z. B. aufgrund mehrerer Antriebseinheiten, in vektorieller Form; zur besseren Unterscheidung wird, wo erforderlich, im Folgenden für jede Antriebseinheit eine eindeutige Index-Zuordnung, z. B. $T_{VKM}$ für die erste Antriebseinheit (Verbrennungskraftmaschine, $T_{EM}$ für die wenigstens eine weitere Antriebseinheit (E-Maschine) mit weiterer Indexierung bei mehr als einer weiteren Antriebseinheit, verwendet),

- aktuell gestellte Kupplungskapazitäten ($T_{cap}$) der n Kupplungen und/oder

- ein minimal und/oder maximal verfügbares Antriebsmoment ($T_{in,min}$,$T_{in,max}$) der ersten und/oder auch der wenigstens einen weiteren Antriebseinheit. Das verfügbare Antriebsmoment ist jeweils von dem Zustand der Antriebseinheiten, der durch weitere Parameter, wie beispielsweise deren Drehzahlen und gestellte Lastanforderungen, charakterisiert werden kann, sowie von der Wirkrichtung des aufgeprägten Antriebsmomentes abhängig. So kann ein von einer weiteren Antriebseinheit, z. B. einer E-Maschine, maximal aufprägbares Bremsmoment betragsmäßig kleiner sein als ein Antriebsmoment.

Es sei angemerkt, dass sämtliche benutzten Variablen mit oder ohne einen zählbaren ganzzahligen Index in vektorieller Form verstanden werden können, wobei der Index das jeweilige Vektorelement bestimmt. Die mathematisch korrekte Schreibweise der vektoriellen Größen ist am Beispiel der aktuell gestellten Kapazitäten ($T_{cap,k}$) mit dem Index k und k = 1,2, ..., n für insgesamt n Kupplungen definiert, und zwar als

$$T_{cap} = \begin{bmatrix} T_{cap,1} \\ T_{cap,2} \\ \vdots \\ T_{cap,n} \end{bmatrix}.$$

Auf die Vektordarstellung sowie das Anhängen des zählbaren ganzzahligen Index wird aus Gründen der Übersichtlichkeit weitgehend verzichtet. Eine Ausnahme bilden die Indizes i und j, die den aktuellen und den nächsten Gang, also den Ist-Gang i und den Ziel-Gang j, bezeichnen und immer nur jeweils ein Element der Indexmenge "beliebige Anzahl Gangstufen" bezeichnen. Weitere Ausnahmen werden gegebenenfalls an den entsprechenden Stellen explizit erläutert. Wird der zählbare Index weggelassen, liegt die Betonung nicht auf dem einzelnen Element der Indexmenge, sondern auf der vektoriellen Größe an sich. Der Fachmann liest den Vektor als solchen und erkennt, ob ein konkretes Element gemeint ist oder nicht. Folgende Indizes werden im Rahmen der vorliegenden Offenbarung verwendet:

| | |
|---|---|
| i | Ist-Gang |
| j | Ziel-Gang |
| n | alle im Getriebe verbauten Kupplungen und Bremsen |
| m | alle während eines Schaltvorgangs geschlossenen, also in Eingriff bleibenden Kupplungen und Bremsen |
| p | alle auf das Getriebe direkt oder indirekt einwirkenden Antriebseinheiten |
| in/out | Eingangs- und Ausgangsgrößen aus Sicht des Getriebes |
| kom/geh | Betonung der Vektorelemente, die den kommenden und gehenden Kupplungen zugeordnet sind |
| nom | nominelle Größe zur eigentlichen Vorsteuerung ohne relative Eingriffe für eine glatte Lastübernahme und Drehzahlüberführung |
| min/max | untere und obere zur Verfügung stehende Werte für Kräfte, Momente oder Kapazitäten. |

Darüber hinaus sei der Vollständigkeit halber angemerkt, dass das erfindungsgemäße Verfahren auch bei einem Doppelkupplungsgetriebe angewendet werden kann, wobei die Transformation in diesem Fall Prinzip bedingt vereinfacht wird, weil einige Zwischenschritte trivial sind.

Die Kupplungskapazität ist die tatsächliche Stellgröße einer Kupplung und gibt den wirkrichtungsunabhängigen Betrag eines entsprechenden zu übertragenden bzw. übertragbaren Drehmoments an. Kupplungskapazitäten werden während eines Schaltvorgangs vorgesteuert, also entsprechend einer betragsmäßigen Vorgabe eingestellt, und werden beibehalten, bis ein Umsteuern, z. B. aufgrund eines anstehenden Schaltvorgangs, erforderlich ist. Gleiches gilt aus Sicht der Getriebesteuerung für das von der wenigstens einen weiteren Antriebseinheit abgegebene Drehmoment, dessen wirkrichtungsunabhängiger Betrag als Stellgröße wie die Kupplungskapazität vorgesteuert wird. Zur Vorsteuerung müssen die physikalischen Zusammenhänge der Kupplungskapazitäten und der hydraulischen Drücke der Stellzylinder, deren Stellpositionen sowie letztlich deren elektrische Ströme zur Ansteuerung der Wegeventile als der tatsächlichen Stellgröße bekannt und hinterlegt sein. Für die Vorsteuerung der wenigstens einen weiteren Antriebseinheit müssen deren Wirkprinzipien bekannt und beherrscht sein, z. B. der Zusammenhang zwischen Ansteuerstrom und abgegebenem Drehmoment einer E-Maschine oder der Zusammenhang zwischen Luft- bzw. Kraftstoffzufuhr einer weiteren Verbrennungskraftmaschine und deren abgegebenem Drehmoment. Der Fachmann auf dem Gebiet der Getriebetechnik kennt diese Zusammenhänge und wendet sie an. Die Vorsteuerung der Kupplungskapazität und des von der wenigstens einen weiteren Antriebseinheit abgegebenen Drehmomentes erfolgt natürlich auch außerhalb eines Schaltvorgangs, im sogenannten Festgang, und zwar für alle geschlossenen Kupplungen und im Leistungsfluss eingebundenen weiteren Antriebseinheiten. Genauer gesagt, ist der Betrag der vorgesteuerten Kupplungskapazitäten der im Festgang geschlossenen Kupplungen oder der Betrag des Drehmoments der wenigstens einen weiteren Antriebseinheiten größer als null. Dieser Spezialfall, bei dem der Istgang i gleich dem Zielgang j entspricht, ist für das vorliegende Lastschaltverfahren nur insoweit relevant, als dass die Kupplungen durch eine zusätzliche Überanpressungssteuerung kontrolliert geschlossen bleiben und die wenigstens eine weitere Antriebseinheit ein notwendiges Halte- bzw. Stützmoment für ein festes oder stufenlos variables Übersetzungsverhältnis aufbringt.

Die Istgrößen werden generell regelmäßig bzw. permanent durch entsprechende Erfassungsmittel erfasst, z. B. mittels Sensoren, oder berechnet und an ein Getriebesteuergerät oder ein Steuergerät der Antriebseinheit übermittelt und dienen gerade bei Schaltvorgängen der Steuerung oder Regelung der Lastübernahme und Drehzahlüberführung. Schließlich sei angemerkt, dass eine Vorsteuerung durch einen Regelkreis überlagert sein kann, der gegebenenfalls vorhandene Störgrößen ausregeln kann. Je genauer die Vorsteuerung erfolgt, desto kleiner ist die Abweichung der Vorsteuergröße von der tatsächlich zu stellenden Größe in der Realität und damit die auszuregelnde Störgröße. Letztere kann durch bekannte Schätz- und Identifikationsverfahren, auch Beobachter genannt, online bestimmt werden.

Um nun den Schaltvorgang des hybridisierten Automatgetriebes anhand einer Basisschaltung eines Doppelkupplungsgetriebes durchzuführen, erfolgt im nächsten Schritt das Auswählen von wenigstens einem Transformationsfaktor in Abhängigkeit wenigstens einer Istgröße und der Gangwechselpaarung (i,j) aus Zustandstabellen. Zustandstabellen können in Form von Look-Up-Tabellen, Kennfeldern oder Ähnlichem vorliegen und auf einem Speicher hinterlegt sein, auf den das Getriebesteuergerät zugreifen kann.

Das Auswählen der Transformationsfaktoren kann in einigen Ausführungsformen das Auswählen von die Automatgetriebetopologie bestimmenden Koeffizienten ($a^{(i,j)}$) in Abhängigkeit der Gangwechselpaarung (i,j) aus einer Zustandstabelle umfassen. Diese Koeffizienten beschreiben das hybridisierte Automatgetriebe hinsichtlich der konkreten Übersetzungen der einzelnen Gangstufen bzw. der funktionalen Zusammenhänge der stufenlos variablen Übersetzung eines CVT-Ganges sowie der konkreten Anordnungen der Kupplungen anhand von automatgetriebetypspezifischen Konstanten und finden sich in den an sich bekannten Getriebe- bzw. Vorsteuergleichungen wieder. Eine Teilmenge der Koeffizienten ($a^{(i,j)}$) bilden die als Kupplungskoeffizienten bezeichneten Koeffizienten $(a_{out}^{(i,j)}, a_{in}^{(i,j)})$, welche die topologisch bedingten Rückkopplungen bzw. Rückwirkung bei einer Kopplung zwischen Antrieb und Abtrieb während eines Gangwechsels abbilden.

Das Auswählen der Transformationsfaktoren kann in einigen Ausführungsformen das Auswählen von Wirkfaktoren ($b^{(i,j)}$) von zu stellenden Kupplungskapazitäten ($T_{cap}$) der n Kupplungen und von einem von der wenigstens einen weiteren Antriebseinheit abgegebenen Antriebsmoment ($T_{EM}$) in Abhängigkeit der Gangwechselpaarung (i,j) aus einer Zustandstabelle umfassen. Bei Automatgetrieben gibt es durch die Vielzahl an Kupplungen/Bremsen entsprechende Zustandstabellen, die für jeden festen Gang bestimmen, ob deren Status offen oder geschlossen sein soll. Nimmt man an, dass sich bei einem Gangwechsel eine Kupplung öffnet und eine andere schließt, ist eine Analogie zu Schaltvorgängen in Doppelkupplungsgetrieben gegeben. Die Darstellung dieser Analogie erfolgt durch die Wirkfaktoren, die die n Kupplungen des Automatgetriebes auf die zwei Kupplungen des Doppelkupplungsgetriebes und umgekehrt skalieren. Je nach Gangwechselpaarung kann jede Kupplung unterschiedliche Leistungspfade im Getriebe schalten, welche unterschiedliche Übersetzungsverhältnisse aufweisen. Darüber hinaus teilt sich aufgrund der vorhandenen Leistungsverzweigung das Antriebsmoment der ersten Antriebseinheit sowie der wenigstens einen weiteren Antriebseinheit auf unterschiedliche Leistungspfade auf. Für jede Gangwechselpaarung lassen sich (konstruktionsbedingte) kupplungsspezifische Koeffizienten, betriebsartenabhängige Koeffizienten der (weiteren) Antriebseinheiten sowie Koeffizienten für die Getriebean- und -abtriebsseite festlegen, welche die jeweiligen getriebeinternen Übersetzungs- und Trägheitsverhältnisse repräsentieren. Aus diesen werden die Wirkfaktoren ermittelt. Die Wirkfaktoren werden bei Gangwechselanforderung umgeschaltet, d.h. wenn Ist- und Zielgang ungleich sind. Sie werden solange beibehalten, bis eine neue Paarung eine Umschaltung erfordert. Die Wirkfaktoren sind im Allgemeinen aus den Koeffizienten ($a^{(i,j)}$) bestimmbar. Liegt kein CVT-Gang vor, handelt es sich bei den Wirkfaktoren um automatgetriebetypspezifische Konstanten. Es ist daher vorteilhafter, diese direkt auszuwählen und nicht bei jedem Gangwechselvorgang neu zu bestimmen. Liegt ein CVT-Gang vor, kann es ebenfalls vorteilhaft sein, die Wirkfaktoren direkt auszuwählen, weil damit je nach Ausgestaltung Rechenkapazität eingespart werden kann.

Die Auswahl der Transformationsfaktoren kann weiterhin in einigen Ausführungsformen das Indizieren ($\mathrm{idx}^{(i,j)}$) der keinen oder wenigstens einer kommenden $\left(\mathrm{idx}_{\mathrm{kom}}^{(i,j)}\right)$ und der keinen oder wenigstens einen gehenden $\left(\mathrm{idx}_{\mathrm{geh}}^{(i,j)}\right)$ und der keinen oder wenigstens einen geschlossen bleibenden $\left(\mathrm{idx}_{\mathrm{blb}}^{(i,j)}\right)$ Kupplung der n Kupplungen und des Status $\left(\mathrm{idx}_{\mathrm{EM}}^{(i,j)}\right)$ der wenigstens einen weiteren Antriebseinheit in Abhängigkeit der Gangwechselpaarung (i,j) und/oder der gewählten Betriebsart aus einer Zustandstabelle umfassen, also das Zuordnen der jeweiligen Kupplung zum jeweiligen Index. Kommende Kupplungen sind dadurch gekennzeichnet, dass sie im Gang i offen und im Gang j geschlossen sind. Beim Schaltvorgang sind diese entsprechend zu schließen. Gehende Kupplungen werden im Zuge des Schaltvorgangs geöffnet, also außer Eingriff gebracht. Bei jedem Schaltvorgang existieren immer wenigstens eine kommende und wenigstens eine gehende Kupplung, wobei die wenigstens eine kommende oder die wenigstens eine gehende Kupplung durch die wenigstens eine weitere Antriebseinheit ersetzt werden kann. Bleibende Kupplungen bleiben geschlossen. Dieser Leistungszweig überträgt demnach weiterhin ein Moment, wobei es abhängig von der Gangwechselpaarung und der Anzahl der Gangwechselpaarungen keine, eine oder mehrere geschlossen bleibende Kupplungen geben kann. Die wenigstens eine weitere Antriebseinheit kann auch eine bleibende Kupplung ersetzen. Die restlichen Kupplungen sind offen, was auch für die wenigstens eine weitere Antriebseinheit gelten kann und dann bedeutet, dass sie keinen Einfluss auf den Leistungsfluss ausübt, z. B. weil ihr Leistungspfad bei vorliegender Gangwechselpaarung nicht aktiv ist, oder ein Drehmoment von Null aufprägt bzw. komplett vom Leistungsfluss entkoppelt ist. Der Status $\left(\mathrm{idx}_{\mathrm{EM}}^{(i,j)}\right)$ der wenigstens einen weiteren Antriebseinheit entspricht demnach dem einer kommenden, einer gehenden, einer geschlossen bleibenden oder einer offen bleibenden Kupplung. Praktisch bedeutet dies, dass der Status der wenigstens einen weiteren Antriebseinheit in die Indizes der kommenden, gehenden und bleibenden Kupplungen einbezogen wird, wobei die wenigstens eine weitere Antriebseinheit als eine einer Kupplung äquivalente Drehmomentquelle angesehen und im jeweiligen Indexvektor als weiteres Tupel aufgenommen wird. Geschlossene und offene Kupplungen behalten jeweils im Gang i und Gang j ihren Status, können jedoch während des Gangwechsels kurzzeitig in bzw. außer Eingriff gebracht werden. Die Indizes der kommenden, gehenden und geschlossen bleibenden Kupplungen und der Status $\left(\mathrm{idx}_{\mathrm{EM}}^{(i,j)}\right)$ der wenigstens einen weiteren Antriebseinheit werden bei Gangwechselanforderung umgeschaltet, d. h. wenn Ist- und Zielgang ungleich sind. Sie werden solange beibehalten, bis eine neue Gangwechselpaarung eine Umschaltung erfordert.

In einigen Ausführungsformen umfasst die Auswahl der Transformationsfaktoren das Auswählen von einem gangwechselpaarungsabhängigen Antriebsmassenträgheitsmoment $\left(J_{\mathrm{in}}^{(i,j)}\right)$ des hybridisierten Automatgetriebes und einem gangwechselpaarungsabhängigen Abtriebsmassenträgheitsmoment $\left(J_{\mathrm{out}}^{(i,j)}\right)$ des hybridisierten Automatgetriebes in Abhängigkeit der Gangwechselpaarung (i,j) aus einer Zustandstabelle. Die gangwechselpaarungsabhängige Antriebs- und Abtriebsmassenträgheitsmomente des Automatgetriebes werden für die Berechnung eines dem gangwechselpaarungsunabhängigen Antriebsmassenträgheitsmoment äquivalenten Antriebsmassenträgheitsmomentes $\left(J_{\mathrm{in}}^{(\mathrm{DCT})}\right)$ des Doppelkupplungsgetriebes benötigt, wobei letzteres aus den Koeffizienten ($a^{(i,j)}$), vorzugsweise den Kopplungskoeffizienten $\left(a_{\mathrm{out}}^{(i,j)}, a_{\mathrm{in}}^{(i,j)}\right)$ und den gangwechselpaarungsabhängigen Antriebs- und Abtriebsmassenträgheitsmomenten $\left(J_{\mathrm{in}}^{(i,j)}, J_{\mathrm{out}}^{(i,j)}\right)$ sowie einem Drehzahlverhältnis ($\omega_{\mathrm{out}}/\omega_{\mathrm{in}}$) der Abtriebswellendrehzahl ($\omega_{\mathrm{out}}$) und der Antriebswellendrehzahl ($\omega_{\mathrm{in}}$) bestimmt werden kann. Die Bestimmung kann geringere Bestimmungsressourcen erfordern, wenn aus dem gangwechselpaarungsabhängigen Antriebsmassenträgheitsmoment und den Kopplungskoeffizienten eine Zwischengröße $\left(\tilde{J}_{\mathrm{in}}^{(i,j)}\right)$ ermittelt wird. Das äquivalente Antriebsmassenträgheitsmoment wird anschließend in Abhängigkeit der Zwischengröße, dem gangwechselabhängigen Abtriebsmassenträgheitsmoment sowie dem Drehzahlverhältnis und den Kopplungskoeffizienten bestimmt bzw. ermittelt. Bei einem Doppelkupplungsgetriebe sind zwei parallele Teilgetriebe vorhanden, deren bewegte Massen und damit deren Massenträgheitsmomente jeweils prinzipiell konstant bleiben. Das Abtriebsmassenträgheitsmoment bei Doppelkupplungsgetrieben kann beispielsweise anhand der Beladung des Fahrzeuges schwanken. Dies ist jedoch ein während einer Fahrt konstanter oder langsam veränderlicher Wert, der durch die Erfassung der Istgrößen berücksichtigt wird und jedenfalls nicht durch den Schaltvorgang beeinflusst wird. Bei Automatgetrieben variieren die Leistungspfade innerhalb einer Getriebetopologie je nach eingelegtem Gang. Damit sind die bewegten Getriebeelemente und damit die Massenträgheitsmomente je nach Gangwechselpaarung (i,j) unterschiedlich. Dem Lastschaltkern des Doppelkupplungsgetriebes, der eigentlich ein konstantes Antriebsmassenträgheitsmoment erwartet, muss nun ein veränderliches Massenträgheitsmoment zugeführt werden. Einerseits sind dabei die gangwechselpaarungsabhängig veränderlichen Trägheitsmomente des Automatgetriebes zu berücksichtigen und andererseits die abtriebskopplungsbedingte Rückkopplung zwischen Abtrieb und Antrieb, nämlich das sogenannte abtriebskopplungsbedingte Störmoment, welches wiederum proportional zum Abtriebswellendrehzahlgradienten am Antrieb wirkt. Es erfolgt eine Korrektur bzw. ein Ausgleich über das dem gangwechselpaarungsunabhängigen Antriebsmassenträgheitsmoment äquivalente Antriebsmassenträgheitsmoment $(J_{in}^{(DCT)})$, um die Basisschaltung des Lastschaltkerns anwenden zu können.

In einigen Ausführungsformen umfasst die Auswahl der Transformationsfaktoren das Auswählen von Koeffizienten ($c^{(i,j)}$) zur Bestimmung von Schnittmomenten ($T_{cut,blb}$) für die m geschlossen bleibenden Kupplungen und zur Bestimmung eines Haltemomentes ($T_{cut,EM}$) der wenigstens einen weiteren Antriebseinheit in Abhängigkeit der Gangwechselpaarung aus einer Zustandstabelle. Schnittmomente sind die aktuell tatsächlich übertragenen Momente der geschlossen bleibenden Kupplungen. Diese werden im Freischnitt (daher Schnittmoment) der jeweiligen Kupplung über ein Momentengleichgewicht aus allen Gesamtkapazitäten und freien Stellgrößen bestimmt. Deren Wirkrichtungen ergeben sich in Abhängigkeit der Gangwechselpaarung (i,j), der Antriebswellendrehzahl ($\omega_{in}$) und der Abtriebswellendrehzahl ($\omega_{out}$). Die Wirkrichtung der wenigstens einen weiteren Antriebseinheit muss prinzipiell nicht bestimmt bzw. berechnet werden, da diese gesteuert in beide Richtungen wirken kann. Auch kann durch die innerhalb systembedingter Grenzen variable Drehmomentabgabe ein Haltemoment ($T_{cut,EM}$) entsprechend den aktuellen Anforderungen durch die wenigstens eine weitere Antriebseinheit abgegeben werden. Die Bestimmung des Haltemoments ($T_{cut,EM}$) erfolgt hingegen analog zur Bestimmung der Schnittmomente der geschlossen bleibenden Kupplungen, was sich auch an den verwendeten Indizes der Formelzeichen für Schnitt- und Haltemoment widerspiegelt. Die anfallenden Schnitt- und Haltemomente können anhand bekannter Stellgrößen des Antriebs, d.h. Antriebsmoment ($T_{in}$) oder alternativ Antriebsgradient ($\dot{\omega}_{in}$) der ersten und/oder der wenigstens einen weiteren Antriebseinheit, Stellgrößen der wenigstens einen gehenden, kommenden und ggf. offenen Kupplungen

($T_{cap}$) bzw. der wenigstens einen weiteren Antriebseinheit ($T_{EM}$) sowie Messgrößen des Abtriebs, d.h. Abtriebsgradient ($\dot{\omega}_{out}$) oder alternativ Abtriebsmoment ($T_{out}$), berechnet werden.

Das Auswählen der Transformationsfaktoren kann in einigen Ausführungsformen alternativ oder zusätzlich das Auswählen von maximal übertragbaren Kupplungskapazitäten ($T_{cap,max}$) der n Kupplungen in Abhängigkeit wenigstens einer Istgröße, beispielsweise der aktuell gestellten Kupplungskapazitäten der n Kupplungen und/oder dem minimal und/oder maximal verfügbaren Antriebsmoment der ersten und der wenigstens einen weiteren Antriebseinheit, umfassen. Der DCT-Lastschaltkern (nicht hybridisiert) steuert die Kupplungsmomente bzw. Kupplungskapazitäten auf Basis des zu übertragenden bzw. angeforderten Antriebsmoments vor. Die tatsächlich zu stellende Kapazität der Kupplungen kann jedoch aufgrund der Wirkfaktoren, die größer, gleich oder kleiner eins und auch negativ sein können, geringer oder höher sein, als der DCT-Lastschaltkern annimmt. Darüber hinaus kennt der Lastschaltkern keine weiteren Antriebseinheiten. Daher müssen die maximal übertragbaren Kupplungskapazitäten und das maximal zu übertragende Antriebsmoment ausgewählt, anhand der Wirkfaktoren in maximal stellbare DCT-Kupplungskapazitäten umgerechnet und an den Lastschaltkern übermittelt werden. Die maximal übertragbaren Kupplungskapazitäten bestimmen sich dabei aus den Kupplungseigenschaften und -kennwerten. Das betragsmäßig maximal übertragbare Antriebsmoment der weiteren Antriebseinheit bestimmt sich u. a. neben den Eigenschaften und Kennwerten der Antriebseinheit aus bereits eingeprägten Halte- bzw. Stützmomenten sowie Antriebsmomenten und deren Wirkrichtungen.

Ein weiterer Schritt des erfindungsgemäßen Verfahrens umfasst das Berechnen von wenigstens einem Transformationsäquivalent für die Berechnung von wenigstens einer doppelkupplungsgetriebespezifischen Stellquantität durch die Basisschaltung des Doppelkupplungsgetriebes in Abhängigkeit wenigstens einer Istgröße und/oder des wenigstens einen Transformationsfaktors. Die Transformationsäquivalente sind umgerechnete Zustandsgrößen, auch (Zustands-)Quantitäten genannt, die der DCT-Lastschaltkern bzw. die Basisschaltung benötigt, um die Stellgrößen, auch Stellquantitäten genannt, für einen Gangwechsel entsprechend den Anforderungen, wie Zugkraftunterbrechungsfreiheit und glatte Lastübernahme sowie Drehzahlüberführung, zu bestimmen. Bei einem normalen Doppelkupplungsgetriebe würden diese Zustandsgrößen den oben definierten Istgrößen (bzw. den aktuell vorliegenden und an den Kupplungen umgesetzten Stellgrößen) entsprechen. Hier sind die Istgrößen allerdings für ein hybridisiertes Automatgetriebe erfasst worden. Sie müssen daher in Abhängigkeit vorzugsweise mehrerer Istgrößen und/oder vorzugsweise mehrerer Transformationsfaktoren in Transformationsäquivalente umgerechnet werden. Als Quantitäten werden Größen bezeichnet, die den aktuellen oder künftig gewollten Zustand der einzelnen Kupplungen oder der Antriebseinheiten charakterisieren. Dabei handelt es sich beispielsweise um die aktuell gestellten oder künftig im Zeitablauf zu stellenden Kupplungskapazitäten oder um Steuerbefehle des Getriebesteuergerätes an die jeweiligen Aktoren. Vor einem Gangwechsel wird im Festgang jede Kupplung mit einer definierten Kapazität und jede weitere Antriebseinheit auf ein definiertes Drehmoment vorgesteuert, die jeweils Zustandsquantitäten darstellen. Während eines Gangwechsels wird jede Kupplung und jede weitere Antriebseinheit mit Stellgrößen bzw. Stellquantitäten beaufschlagt, die die gewünschte Kupplungskapazität bzw. das gewünschte abzugebende Drehmoment im Zeitablauf einstellen. Die Zustands- und Stellquantitäten liegen für jede Kupplung und jede weitere Antriebseinheit vor, unabhängig davon, ob diese aktiv, also beim derzeitigen Gangwechsel in oder außer Eingriff gebracht wird.

In einigen Ausführungsformen kann das Berechnen des wenigstens einen Transformationsäquivalentes das Berechnen eines äquivalenten Antriebsmassenträgheitsmomentes $(J_{in}^{(DCT)})$ in Abhängigkeit des gangwechselpaarungsabhängigen Antriebsmassenträgheitsmomentes $(J_{in}^{(i,j)})$ und des gangwechselpaarungsabhängigen Abtriebsmassenträgheitsmomentes $(J_{out}^{(i,j)})$ und eines Drehzahlverhältnisses $(\omega_{out}/\omega_{in})$ der Abtriebswellendrehzahl $(\omega_{out})$ und der Antriebswellendrehzahl $(\omega_{in})$ umfassen und der Koeffizienten $(a^{(i,j)})$, vorzugsweise der Kopplungskoeffizienten $(a_{out}^{(i,j)}, a_{in}^{(i,j)})$. Wie bereits erwähnt, dient das äquivalente Antriebsmassenträgheitsmoment dazu, die gangwechselpaarungsabhängigen Antriebs- und Abtriebsmassenträgheitsmomente unter Berücksichtigung abtriebskopplungsbedingter Störmomente für den Lastschaltkern gangwechselpaarungsunabhängig aufzubereiten, damit dieser ein für ihn äquivalentes Antriebsmassenträgheitsmoment zur Schaltablaufsteuerung verwenden kann.

In manchen Ausführungsformen kann das Berechnen des wenigstens einen Transformationsäquivalentes das Berechnen von doppelkupplungsgetriebespezifischen Eingangswellendrehzahlen $(\omega_{in}^{(DCT)})$ in Abhängigkeit der Gangwechselpaarung (i,j) und der Abtriebswellendrehzahl $(\omega_{out}^{(i,j)})$ sowie der Istübersetzung $(\gamma_i)$ und der Zielübersetzung $(\gamma_j)$ umfassen. Das Doppelkupplungsgetriebe weist zwei parallele Teilgetriebe auf, die jeweils eine Eingangs- und eine Ausgangswelle aufweisen. Beide Eingangswellendrehzahlen sind identisch und entsprechen der Drehzahl der (ersten) Antriebseinheit, genauer deren Kurbelwellendrehzahl. Beide Ausgangswellendrehzahlen hängen dann vom jeweiligen Übersetzungsverhältnis des Teilgetriebes ab, welches wiederum auf Basis des Fahrerwunsches ausgewählt wird.

In AT-Getrieben unterscheiden sich die Kupplungsdrehzahlen (Getriebeeingangsseitige Kupplungsdrehzahl $\omega_{in}^{(i,j)}$, auch Kupplungseingangsdrehzahl genannt, und getriebeausgangsseitige Kupplungsdrehzahl $\omega_{out}^{(i,j)}$, auch Kupplungsausgangsdrehzahl genannt), also die der jeweiligen Kupplung zugeordnete Antriebs- und Abtriebswellendrehzahlen, je nach ihrer topologischen Anordnung zur Getriebeeingangswelle. Die Kupplungseingangsdrehzahl jeder Kupplung kann verschieden von den Kupplungseingangsdrehzahlen der anderen Kupplungen sowie der Drehzahl der ersten Antriebseinheit, genauer deren Kurbelwellendrehzahl, sein. Somit sind im AT-Getriebe neben den Ausgangsdrehzahlen auch die Eingangsdrehzahlen der Kupplungen zu bestimmen. Diese Drehzahlen können in eine äquivalente doppelkupplungsgetriebespezifische Eingangswellendrehzahl $(\omega_{in}^{(DCT)})$ umgerechnet werden. Vorteilhafter Weise wird dadurch eine genauere Anweisung von Stellquantitäten durch den DCT-Lastschaltkern ermöglicht.

In einigen Ausführungsformen kann das Berechnen der Transformationsäquivalente das Berechnen von Wirkrichtungen der Schnittmomente $(T_{cut,blb})$ für die m geschlossen bleibenden Kupplungen in Abhängigkeit der Gangwechselpaarung (i,j) und der Kupplungseingangsdrehzahl $(\omega_{in}^{(i,j)})$ und der Kupplungsausgangsdrehzahl $(\omega_{out}^{(i,j)})$ der n Kupplungen umfassen. Die Wirkrichtungen sind schlupfabhängig und lassen sich einfach aus den Kupplungsein- und -ausgangsdrehzahlen unter Berücksichtigung der Gangwechselpaarung bestimmen.

In einigen Ausführungsformen kann das Berechnen der Transformationsäquivalente das Berechnen der Wirkrichtung des Haltemoments $(T_{cut,EM})$ der wenigstens einen weiteren Antriebseinheit umfassen.

Weiterhin kann in einigen Ausführungsformen das Berechnen der Transformationsäquivalente das Berechnen von wirkrichtungsangepassten Koeffizienten $(\tilde{c}^{(i,j)})$ in Abhängigkeit der berechneten Wirkrichtungen der Schnittmomente $(T_{cut,blb})$ und der Koeffizienten $(c^{(i,j)})$ zur Bestimmung der Schnittmomente $(T_{cut,blb})$ für die m geschlossen bleibenden Kupplungen umfassen. Vorteilhafterweise kann durch diesen Zwischenschritt die Komplexität der weiteren Schritte des erfindungsgemäßen Verfahrens reduziert und damit die maximale Rechenlast durch sequentielle Verarbeitung reduziert werden.

Weiterhin kann das Berechnen des wenigstens einen Transformationsäquivalentes in einigen Ausführungsformen des erfindungsgemäßen Verfahrens das Berechnen der Schnittmomente ($T_{cut,blb}$) an den m geschlossen bleibenden Kupplungen in Abhängigkeit der wirkrichtungsangepassten Koeffizienten ($\tilde{c}^{(i,j)}$) und des Antriebsmoments ($T_{in}$) und der aktuell gestellten Kupplungskapazitäten ($T_{cap}$) der n Kupplungen und des aktuellen Abtriebsgradienten ($\dot{\omega}_{out}$) und des aktuell von der wenigstens einen weiteren Antriebseinheit zur Verfügung gestellten und an einem Element des hybridisierten Automatgetriebes anliegenden Antriebsmoment ($T_{EM}$) umfassen. Alternativ dazu kann das Berechnen der Transformationsäquivalente in einigen Ausführungsformen des erfindungsgemäßen Verfahrens das Berechnen der Schnittmomente ($T_{cut,blb}$) an den m geschlossen bleibenden Kupplungen in Abhängigkeit der Koeffizienten ($c^{(i,j)}$) und der Wirkrichtungen und des Antriebsmoments ($T_{in}$) der ersten und/oder der wenigstens einen weiteren Antriebseinheit und der aktuell gestellten Kupplungskapazitäten ($T_{cap}$) der keinen oder wenigstens einen kommenden und der keinen oder wenigstens einen gehenden und der keinen oder wenigstens einen geschlossen bleibenden Kupplung und des aktuellen Abtriebsgradienten ($\dot{\omega}_{out}$) und des aktuell von der wenigstens einen weiteren Antriebseinheit zur Verfügung gestellten und an einem Element des hybridisierten Automatgetriebes anliegenden Antriebsmoment ($T_{EM}$) umfassen. Im vorliegenden Verfahren kann anstelle des Antriebsmoments auch der Antriebsgradient und anstelle des Abtriebsgradienten auch das Abtriebsmoment für die Berechnung verwendet werden. Unabhängig davon kann der angeforderte Abtriebsgradient oder ein gemessener Abtriebsgradient verwendet werden.

Schließlich kann das Berechnen des wenigstens einen Transformationsäquivalentes in einigen Ausführungsformen des erfindungsgemäßen Verfahrens das Berechnen eines doppelkupplungsgetriebespezifischen Überanpressungsfaktors $\left(k_{\ddot{U}b,scale}^{(DCT)}\right)$ und/oder eines doppelkupplungsgetriebespezifischen Überanpressungsoffsetwertes $\left(k_{\ddot{U}b,offset}^{(DCT)}\right)$ in Abhängigkeit der Gangwechselpaarung (i,j) und der Wirkfaktoren ($b^{(i,j)}$) und in Abhängigkeit von globalen Skalierungsfaktoren oder kupplungsindividuellen Skalierungsfaktoren und/oder globalen Offsetwerten oder kupplungsindividuellen Offsetwerten der n Kupplungen umfassen, wobei die globalen Skalierungsfaktoren oder kupplungsindividuellen Skalierungsfaktoren und/oder globalen Offsetwerte oder kupplungsindividuellen Offsetwerte in Abhängigkeit der Gangwechselpaarung (i,j) und der Schnittmomente ($T_{cut,blb}$) an den m geschlossen bleibenden Kupplungen ausgewählt werden. Eine Überanpressung einer Kupplung bedeutet das Ansteuern der Kupplungsaktorik mit einem Druck (je nach Kupplungstyp alternativ auch Ansteuern der Kupplungsaktorik mit einem definierten Weg), der beide Kupplungsseiten (analog für Bremse und Gehäuse) so stark zusammenpresst, dass aufgrund der Haftreibung ein höheres Drehmoment übertragen werden kann als nötig wäre. Diese Überanpressung wird durchgeführt, um Mikroschlupf zu verhindern und das notwendige Drehmoment sicher zu übertragen. Während eines Schaltvorgangs eines Automatgetriebes erfolgen zwei Arten der Überanpressung, nämlich an kommenden und gehenden Kupplungen sowie an geschlossen bleibenden Kupplungen. Die Überanpressungen an den kommenden und gehenden Kupplungen dienen dazu, die gehende Kupplung vor dem Schaltvorgang in einen definierten Zustand zu versetzen, der eine kontrollierte Öffnung ermöglicht. Die kommende Kupplung wird nach dem Schaltvorgang definiert überangepresst, um den Schaltvorgang kontrolliert abzuschließen. Dies geschieht mittels Skalierungsfaktoren oder Offsetwerten, die für alle Kupplungen gleich oder für jede Kupplung je nach Gangwechselpaarung individuell vorgegeben sein können. Eine derartige Überanpressung kann auch bei Doppelkupplungsgetrieben stattfinden, wo diese für die beiden Kupplungen immer konstant ist. Somit müssen die automatgetriebespezifischen Skalierungsfaktoren und Offsetwerte in doppelkupplungsgetriebespezifische Überanpressungsfaktoren bzw. Überanpressungsoffsetwerte transformiert bzw. übersetzt werden, was anhand der Wirkfaktoren geschieht. Vorteilhafterweise geht somit eine Überanpressungssteuerung zu einer besser definierten Schaltvorgangsgestaltung über den DCT-Lastschaltkern in das erfindungsgemäße Schaltverfahren ein. Die Überanpressung an den geschlossen bleibenden Kupplungen soll Schlupf während des Gangwechselvorgangs verhindern. Dafür gibt es keine Entsprechung im Doppelkupplungsgetriebe, weshalb die Skalierungsfaktoren und Offsetwerte (global oder kupplungsindividuell) in Abhängigkeit der Schnittmomente ausgewählt werden können. Liegt beispielsweise nur ein Teillastmoment am Getriebeeingang an, sind die zu übertragenden Drehmomente, also die bestimmbaren Schnittmomente geringer als bei Volllast. Ein Offsetwert kann somit bei Teillast geringer ausfallen als bei Volllast. Skalierungsfaktoren können analog dazu oder unabhängig davon ausgewählt werden.

Anschließend erfolgt das Zuführen der wenigstens einen Eingangsgröße und/oder des wenigstens einen Transformationsfaktors und/oder des wenigstens einen Transformationsäquivalents zum Doppelkupplungsgetriebe-Lastschaltkern und damit zu einer Basisschaltung des Doppelkupplungsgetriebes. Der DCT-Lastschaltkern kann auf einem separaten Getriebesteuergerät ausgeführt und die Größen können kabelgebunden, z. B. über ein Bus-System, oder kabellos erhalten bzw. empfangen werden. Alternativ wird eine Basisschaltung auf demselben Getriebesteuergerät bzw. Steuergeräteverbund wie die Berechnung der Größen ausgeführt, wodurch das Zuführen der Größen auf bekanntem datentechnischen Austausch beruhen kann.

Im nächsten Schritt des erfindungsgemäßen Verfahrens wird wenigstens eine doppelkupplungsgetriebespezifische Stellquantität, also die doppelkupplungsgetriebespezifische Stellgröße, durch eine Basisschaltung in Abhängigkeit wenigstens einer Istgröße und/oder des wenigstens einen Transformationsfaktors und/oder des wenigstens einen Transformationsäquivalents berechnet. Die doppelkupplungsspezifischen Stellquantitäten sind die Steuerbefehle, die das Getriebesteuergerät an die jeweiligen Aktoren, wie Kupplungsstellventile von Kupplungsstellzylindern, eines Doppelkupplungsgetriebes ausgeben würde.

Die doppelkupplungsgetriebespezifische Stellquantität kann in einigen Ausführungsformen einen relativen Antriebsgradienten ($\Delta\omega_{VKM}$) und/oder ein relatives Antriebsmoment ($\Delta T_{VKM}$) der ersten Antriebseinheit zur Drehzahlüberführung umfassen. Der relative Antriebsgradient ($\Delta\omega_{VKM}$) wird von einer Basisschaltung, also dem doppelkupplungsspezifischen Lastschaltkern, angewiesen bzw. vorgegeben. Er wird so geformt, dass ein gewünschter Drehzahlverlauf der Antriebswelle über die Zeit erreicht wird und hängt typischerweise von der Applikation der Schaltzeit und weiteren Applikationsparametern, wie dem Schaltkomfort, ab. Alternativ oder zusätzlich kann ein relatives Antriebsmoment ($\Delta T_{VKM}$) bestimmt werden, welches von der ersten Antriebseinheit angefordert wird, um die Drehzahlüberführung durchzuführen bzw. zu unterstützen.

In einigen Ausführungsformen umfasst die wenigstens eine doppelkupplungsgetriebespezifische Stellquantität Basiskupplungskapazitäten $\left(T_{cap,kom}^{(DCT)}, T_{cap,geh}^{(DCT)}\right)$ zur Lastübernahme während des Schaltvorgangs für die kommende und gehende Kupplung, wobei die Basiskupplungskapazitäten $\left(T_{cap,kom}^{(DCT)}, T_{cap,geh}^{(DCT)}\right)$ durch Bewertung mit der jeweiligen Wirkrichtung in Basiskupplungsmomente $\left(T_{cl,kom,nom}^{(DCT)}, T_{cl,geh,nom}^{(DCT)}\right)$ umgerechnet werden können. Diese Basiskupplungskapazitäten sind die relevanten Steuergrößen für die Lastübernahme während eines Schaltvorgangs eines Doppelkupplungsgetriebes und entsprechen den abnehmenden (gehende Kupplung) und zunehmenden (kommende Kupplung) Kupplungskapazitäten. Die zu übertragenden Kupplungsmomente ergeben sich aus den wirkrichtungsbewerteten Kupplungskapazitäten. Somit lassen sich die Basiskupplungskapazitäten auch als Basiskupplungsmomente $\left(T_{cl,kom}^{(DCT)}, T_{cl,geh}^{(DCT)}\right)$ darstellen, wobei die Summe der Basiskupplungsmomente von kommender und gehender Kupplung dem zu übertragenen Antriebsmoment (unter Berücksichtigung des Produktes aus An- bzw. Abtriebsmassenträgheitsmoment und Beschleunigung der An-bzw. Abtriebswellen) entspricht. Die Basiskupplungsmomente $\left(T_{cl,kom}^{(DCT)}, T_{cl,geh}^{(DCT)}\right)$ setzen sich wiederum aus nominellen Basiskupplungsmomenten $\left(T_{cl,kom,nom}^{(DCT)}, T_{cl,geh,nom}^{(DCT)}\right)$ und relativen Basiskupplungsmomenten $\left(\Delta T_{cl,kom}^{(DCT)}, \Delta T_{cl,geh}^{(DCT)}\right)$ zusammen. Die nominellen Basiskupplungsmomente entsprechen der Komponente zur Übertragung des Antriebsmoments und die relativen Basiskupplungsmomente dienen, alternativ oder zusätzlich zu dem relativen Antriebsmoment, zur Drehzahlüberführung während eines Schaltvorgangs eines Doppelkupplungsgetriebes.

Weiterhin umfasst in einigen Ausführungsformen die wenigstens eine doppelkupplungsgetriebespezifische Stellgröße Basisüberanpressungskupplungskapazitäten $\left(T_{Üb,kom}^{(DCT)}, T_{Üb,geh}^{(DCT)}\right)$ zur Überanpressungssteuerung für die kommende und/oder gehende Kupplung in Abhängigkeit des doppelkupplungsgetriebespezifischen Überanpressungsfaktors $\left(k_{Üb,scale}^{(DCT)}\right)$ oder des doppelkupplungsgetriebespezifischen Überanpressungsoffsetwertes $\left(k_{Üb,offset}^{(DCT)}\right)$. Die zu übertragenden Basisüberanpressungskupplungsmomente ergeben sich aus den wirkrichtungsbewerteten Basisüberanpressungskupplungskapazitäten und werden über die Basiskupplungsmomente hinaus durch die kommende, lastannehmende Kupplung sowie die gehende, lastabgebende Kupplung übertragen. Dies erfolgt anhand des doppelkupplungsgetriebespezifischen Überanpressungsfaktors relativ zum Nominalmoment, und damit strategisch zum Schnittmoment, oder anhand des doppelkupplungsgetriebespezifischen Überanpressungsoffsetwertes absolut. Dabei wird zu Beginn eines Schaltvorgangs die gezielt aufgebaute vorhandene Überanpressung der gehenden Kupplung abgebaut und zum Ende des Schaltvorgangs eine benötigte Überanpressung der kommenden Kupplung gezielt aufgebaut. Dieser Vorgang kann je nach Basisschaltung parallel zur Lastübernahme erfolgen, um Schaltzeit zu sparen. Das soll sicherstellen, dass die gehende Kupplung geschlossen bleibt und kontrolliert geöffnet werden kann.

In einigen Ausführungsformen umfasst die wenigstens eine doppelkupplungsgetriebespezifische Stellquantität ein doppelkupplungsgetriebespezifisches Lastschaltmoment $\left(T_{EM}^{(DCT)}\right)$ wenigstens einer weiteren doppelkupplungsgetriebeäquivalenten Antriebseinheit, wobei das doppelkupplungsgetriebespezifische Lastmoment $\left(T_{EM}^{(DCT)}\right)$ in Abhängigkeit von Transformationsfaktoren und Transformationsäquivalenten, wie den Wirkfaktoren ($b^{(i,j)}$) und/oder dem von der wenigstens einen weiteren Antriebseinheit abgegebenen Antriebsmoment ($T_{EM}$) und/oder dem minimal und/oder maximal übertragbaren Antriebsmoment ($T_{EM,min}$, $T_{EM,max}$) der wenigstens einen weiteren Antriebseinheit und/oder dem Haltemoment ($T_{cut,EM}$) der wenigstens einen weiteren Antriebseinheit, berechnet wird. Das doppelkupplungsgetriebespezifische Lastmoment entspricht einem Drehmoment, das von einer virtuellen weiteren Antriebseinheit des virtuellen Doppelkupplungsgetriebes auf dieses aufgeprägt wird und vom Lastschaltkern bestimmt bzw. berechnet wird. Der Lastschaltkern bestimmt die Stellquantitäten der (virtuellen DCT-)Kupplungen für den gewünschten Last- und Drehzahlübergang. Dies geschieht für üblicherweise zwei Teilgetriebe, also zwei Kupplungen. Die virtuelle weitere Antriebseinheit kann dabei als weiteres Teilgetriebe interpretiert werden. Der Lastschaltkern kann durch Hinzufügen weiterer paralleler Teilgetriebe auf eine theoretisch beliebige Anzahl weiterer Antriebseinheiten skaliert werden, so dass die gleichzeitige Ansteuerung der weiteren Antriebseinheiten möglich ist. Weiterhin kann der Lastschaltkern mit nur einer virtuellen Antriebseinheit auch mehrere Antriebseinheiten steuern, wenn diese nicht gleichzeitig angesteuert werden müssen. Das auf der virtuellen Antriebseinheit gestellte Moment wird dann, analog zur Verteilung der virtuellen Kapazitäten auf die physikalisch existierenden Kupplungen, auf die entsprechende aktive Antriebseinheit umgerechnet. Die zu berechnenden Stellquantitäten können anhand geringfügig modifizierter Gleichungen der ersten beiden Teilgetriebe ermittelt werden. Neben der Anordnung eines weiteren parallelen Teilgetriebes kann die weitere Antriebseinheit auch als seriell zur ersten Antriebseinheit interpretiert werden. Dies ist abhängig von der tatsächlichen Struktur des Getriebes oder der vorliegenden Gangwechselpaarung. Im Fall der seriellen Anordnung addieren sich die positiven und/oder negativen Drehmomente der ersten und weiteren Antriebseinheit.

Im weiteren Verlauf des erfindungsgemäßen Verfahrens erfolgt ein Berechnen von wenigstens einer automatgetriebespezifischen Stellquantität in Abhängigkeit wenigstens einer Istgröße und/oder des wenigstens einen Transformationsfaktors und/oder des wenigstens einen Transformationsäquivalents und/oder der wenigstens einen doppelkupplungsgetriebespezifischen Stellquantität. Vorzugsweise erfolgt das Berechnen der automatgetriebespezifischen Stellquantitäten bzw. Stellgrößen in Abhängigkeit mehrerer Istgrößen und mehrerer Transformationsfaktoren und mehrerer Transformationsäquivalente und mehrerer doppelkupplungsgetriebespezifischer Stellquantitäten. Dies ermöglicht ein wesentlich genaueres Berechnen der automatgetriebespezifischen Stellquantitäten unter der aufgabengemäßen Erzielung eines glatten, also abtriebsneutralen Abtriebsmomentes während eines Lastschaltvorgangs.

Bei einigen Ausführungsformen kann das Berechnen der automatgetriebespezifischen Stellquantitäten ein Berechnen von Lastschaltkupplungskapazitäten

$$\left(T_{cap,kom}^{(AT)}, T_{cap,geh}^{(AT)}\right)$$

für die kommende und gehende Kupplung und Berechnen von einem Lastschaltmoment

$$\left(T_{EM}^{(AT)}\right)$$

der wenigstens einen weiteren Antriebseinheit in Abhängigkeit der Basiskupplungskapazitäten

$$\left(T_{cap,kom}^{(DCT)}, T_{cap,geh}^{(DCT)}\right)$$

und des doppelkupplungsgetriebespezifischen Lastschaltmomentes $\left(T_{EM}^{(DCT)}\right)$ der wenigstens einen weiteren Antriebseinheit und der Wirkfaktoren ($b^{(i,j)}$) zur Lastübernahme umfassen. Die von einer Basisschaltung gestellten Basiskupplungskapazitäten der kommenden und gehenden Kupplung werden mit den Wirkfaktoren auf die physikalische Automatgetriebe-Ebene zurücktransformiert, wobei auch die Hybridstruktur beachtet werden muss. Der Vektor der Wirkfaktoren ($b^{(i,j)}$) weist nur für die jeweils kommenden und gehenden Kupplungen sowie, je nach Gangwechselpaarung, für die wenigstens eine weitere Antriebseinheit eine Komponente ungleich null auf. Gäbe es im Automatgetriebe bei einem Gangwechsel genau eine kommende und eine gehende Kupplung, ließen sich die Wirkfaktoren alternativ $\left(b_{kom}^{(i,j)}, b_{geh}^{(i,j)}\right)$ jeweils als skalare Größen ausdrücken. Die Lastschaltkupplungskapazitäten und das Lastschaltmoment $\left(T_{EM}^{(AT)}\right)$ bilden den Teil der zu stellenden (Kupplungs-)Kapazitäten, der für die reine Lastübernahme während des Gangwechselvorgangs auf AT-Ebene zuständig bzw. notwendig ist.

Weiterhin kann in einigen Ausführungen das Berechnen der automatgetriebespezifischen Stellquantitäten ein Berechnen eines Eingriffsmomentes ($\Delta T_{in}$) der ersten und/oder der wenigstens einen weiteren Antriebseinheit und/oder wenigstens eines Eingriffsmomentes ($\Delta T_{cl}$) der keinen oder wenigstens einen kommenden und/oder der keinen oder wenigstens einen gehenden und/oder der keinen oder wenigstens einen bleibenden Kupplung in Abhängigkeit der Gangwechselpaarung ($i,j$) und des relativen Antriebsgradienten ($\Delta\dot{\omega}_{VKM}$) zur Drehzahlüberführung umfassen. Der Vorgang der Drehzahlüberführung ist im Grundsatz bekannt. Es werden positive und negative Eingriffsmomente von der Antriebseinheit ausgegeben, um je nach Schaltungstyp, beispielsweise Zug-Hochschaltung oder Schub-Hochschaltung, ein möglichst konstantes Abtriebsdrehmoment zu erhalten. Je nach Betriebs- bzw. Arbeitspunkt der ersten Antriebseinheit kann es vorkommen, dass diese allein nicht genug Potential hat, ein positives Eingriffsmoment (arbeitspunktabhängige Antriebsleistung nicht ausreichend verfügbar) oder negatives Eingriffsmoment (Schleppleistung ausgeschöpft) in ausreichender Höhe bereitzustellen. In diesen Fällen können durch die kommenden, die gehenden oder, falls bei der vorliegenden Gangwechselpaarung vorhanden, die bleibenden Kupplungen oder durch die wenigstens eine weitere Antriebseinheit Eingriffsmomente übertragen werden, die das Abtriebsmoment möglichst konstant bzw. den Abtriebsgradienten möglichst glatt halten. In einigen Fällen kann es ausreichen, alleinige Kupplungseingriffe durchzuführen, also ohne Eingriffsmomente der ersten und/oder der wenigstens einen weiteren Antriebseinheit auszugeben bzw. anzusteuern, um während der Drehzahlüberführung das Abtriebsmoment konstant zu halten. Eingriffsmomente der Kupplungen und Antriebseinheiten sind wie Vorsteuermomente über die Wirkrichtung in Stellkapazitäten umrechenbar.

In einigen Ausführungsformen kann weiterhin das Berechnen der automatgetriebespezifischen Stellquantitäten ein Berechnen wenigstens eines Kompensationsmomentes ($\Delta T_{cl,komp}$) der keinen oder wenigstens einen kommenden und/oder der keinen oder wenigstens einen gehenden und/oder der keinen oder wenigstens einen offenen Kupplung und/oder eines Kompensationsmomentes ($\Delta T_{EM,komp}$) der wenigstens einen weiteren Antriebseinheit in Abhängigkeit des Eingriffsmomentes ($\Delta T_{in}$) der ersten und/oder der wenigstens einen weiteren Antriebseinheit und/oder des wenigstens einen Eingriffsmomentes ($\Delta T_{cl}$) der keinen oder wenigstens einen kommenden und/oder der keinen oder wenigstens einen gehenden und/oder der keinen oder wenigstens einen geschlossenen Kupplung und/oder des Abtriebsgradienten ($\dot{\omega}_{out}$) und/oder der Koeffizienten

$$\left(a_{out}^{(i,j)}, a_{in}^{(i,j)}\right)$$ und/oder des gangwechselpaarungsabhängigen Abtriebsmassenträgheitsmomentes $\left(J_{out}^{(i,j)}\right)$ umfassen. Bei Eingriffen der ersten Antriebseinheit ergeben sich Störfaktoren im Sinne von Störmomenten, die aufgrund der Kopplung zwischen Antrieb und Abtrieb über einen geschlossen bleibenden Leistungspfad des hybridisierten Automatgetriebes auf den Abtrieb durchschlagen und als nicht abtriebsneutral spürbar sind. Der Vorgang der abtriebsneutralen Lastschaltung wird Kompensation genannt, weil störende Momente, hervorgerufen durch Kopplungen der Antriebs- und Abtriebsseite des hybridisierten Automatgetriebes kompensiert, also ausgeglichen werden. Diese störenden Momente können direkt oder indirekt gemessen werden, was allerdings sehr aufwändig ist und auch eine Vorsteuerung oder Ausregelung der Störmomente sehr aufwändig und ressourcenintensiv macht. Einfacher ist die Überwachung von Drehzahlschwankungen am Abtrieb bzw. von Abweichungen des Abtriebsgradienten. Jedoch kann nur mithilfe einer möglichst exakten Vorsteuerung eine befriedigende Regelungsgüte in entsprechend kurzer Zeit erreicht werden. Daher werden die Kompensationsmomente der betroffenen Kupplungen und der wenigstens einen weiteren Antriebseinheit möglichst genau bestimmt und in die Vorsteuerung, also die Anweisung der Kupplungskapazitäten einbezogen. Der Abtriebsgradient soll dabei, genauso wie bei Doppelkupplungsgetrieben, von der Drehzahlüberführung am Antrieb unbeeinträchtigt bleiben, was durch entsprechende Kompensationsmomente der Kupplungen oder der wenigstens einen weiteren Antriebseinheit im Automatgetriebe gewährleistet werden kann. Kompensationseingriffe können sowohl während der Phase der Drehzahlüberführung als auch während der Phase der Lastübernahme erfolgen. Findet ein Eingriff der ersten Antriebseinheit durch Aufbringen eines Eingriffsmomentes statt, vorzugsweise während der Drehzahlüberführungsphase, so wird ein Teil dieses Eingriffsmomentes über den geschlossenen Leistungspfad an den Abtrieb weitergeleitet. Dieser Teil des Eingriffsmomentes soll kompensiert werden. Im Falle eines relativ negativen Eingriffsmomentes, beispielsweise bei Hochschaltungen, kann die Kompensation durch eine erhöhte Kupplungskapazität einer geeigneten Kupplung erfolgen, um beispielsweise einen Drehmomenteinbruch am Abtrieb zu vermeiden. Geeignet ist eine Kupplung, die noch über genug positive oder negative Drehmomentübertragungskapazität verfügt. Bestimmt werden geeignete Kupplungen über getriebetopologieabhängige, also von den spezifischen Getriebekoeffizienten abhängige Störterme in den Bewegungsgleichungen. Eine besonders geeignete Kupplung ist eine offene Kupplung. Alternativ oder zusätzlich zur Kompensation mittels der wenigstens einen offen bleibenden Kupplung erfolgt die Kompensation dadurch, dass während des Schaltvorgangs, vorzugsweise während der Phase der Drehzahlüberführung, ein Eingriffsmoment der wenigstens einen weiteren Antriebseinheit auf einen aktiven, also einen kommenden oder gehenden oder geschlossen bleibenden oder auf einen nicht aktiven, also einen offen bleibenden Leistungspfad, aufgebracht wird. Die wenigstens eine weitere Antriebseinheit ist dabei vorzugsweise eine im Getriebe integrierte E-Maschine, die jedes Störmoment wirkrichtungsabhängig bis zu ihrer maximalen Drehmomentkapazität bzw. einem maximal übertragbaren Antriebsmoment durch Beschleunigen oder Abbremsen von Getriebeelementen des jeweiligen Leistungspfades kompensieren kann. Vorteilhafterweise ist eine derartige Kompensation besonders einfach und genau durchführbar, allerdings nur anwendbar, wenn wenigstens eine weitere Antriebseinheit im oder am Getriebe verbaut ist und mittels welcher ein direkter Eingriff in einen Leistungspfad bzw. eine Gangstufe möglich ist. Die wenigstens eine weitere Antriebseinheit, vorzugsweise eine E-Maschine, kann wie eine Kupplung an beliebiger Stelle im Getriebe verbaut sein. Wegen der Stromversorgung bzw. der geforderten Rekuperationsfähigkeit ist sie aber in der Regel wie eine Bremse zwischen Rahmen und einer Getriebewelle montiert. Die Montage zwischen zwei Wellen wäre auch möglich. Die wenigstens eine weitere Antriebseinheit kann dadurch konstruktionsbedingt nur auf eine begrenzte Zahl an Leistungspfaden ein Eingriffsmoment aufbringen. Im Gegenzug ist es aber möglich, ein bidirektionales Eingriffsmoment an die möglichen Leistungspfade abzugeben, wodurch ein weiterer Freiheitsgrad für einen Eingriff gewonnen wird. Prinzipiell unterliegt die Bestimmung des Eingriffsmomentes aber den gleichen Bedingungen wie die Bestimmung des Eingriffsmomentes der offenen Kupplungen und kann durch die Steuerung der wenigstens einen weiteren Antriebseinheit in an sich bekannter Weise umgesetzt werden. Werden Eingriffsmomente sowohl von offenen Kupplungen als auch von der wenigstens einen weiteren Antriebseinheit aufgebracht, kann einerseits besonders vorteilhaft ein weiter Bereich von Betriebszuständen abgedeckt werden und andererseits eine Kompensation mit minimalen Eingriffen für den jeweiligen Betriebspunkt erfolgen. Darüber hinaus können auch während der Lastübernahme abtriebskopplungsbedingte Störmomente auftreten. Dabei wirken sich Drehmomentschwankungen am Abtrieb, hervorgerufen durch die gangwechselbedingten Drehmomentübersetzungsänderungen, wenigstens auf die erste Antriebseinheit aus. Diese während der Lastübernahme auftretenden abtriebskopplungsbedingten Störmomente können ebenfalls durch Kompensationsmomente der keinen oder wenigstens einen kommenden und/oder der keinen oder wenigstens einen gehenden und/oder der keinen oder wenigstens einen offenen Kupplung und/oder der wenigstens einen weiteren Antriebseinheit, vorzugsweise durch Kompensationsmomente der keinen oder wenigstens einen kommenden und/oder gehenden Kupplung kompensiert werden. Das notwendige Kompensationsmoment wird in Abhängigkeit des Abtriebsgradienten $\dot{\omega}_{out}$) und der Koeffizienten $(a^{(i,j)})$, vorzugsweise der Kopplungskoeffizienten $(a_{out}^{(i,j)}, a_{in}^{(i,j)})$, und des gangwechselpaarungsabhängigen Abtriebsmassenträgheitsmomentes $(J_{out}^{(i,j)})$ ermittelt.

Das Berechnen der automatgetriebespezifischen Stellquantitäten kann in einigen Ausführungsformen das Berechnen von Überanpressungskupplungskapazitäten $(T_{\ddot{U}b,blb})$ der keinen oder wenigstens einen geschlossen bleibenden Kupplung in Abhängigkeit der Schnittmomente $(T_{cut,blb})$ für die m geschlossen bleibenden Kupplungen und der globalen Skalierungsfaktoren oder kupplungsindividuellen Skalierungsfaktoren und/oder der globalen Offsetwerte oder kupplungsindividuellen Offsetwerte der n Kupplungen umfassen.

Das Berechnen der automatgetriebespezifischen Stellquantitäten kann weiterhin in einigen Ausführungsformen das Berechnen von Überanpressungskupplungskapazitäten $(T_{\ddot{U}b,kom}^{(AT)}, T_{\ddot{U}b,geh}^{(AT)})$ der wenigstens einen kommenden und der wenigstens einen gehenden Kupplung in Abhängigkeit der Basisüberanpressungskupplungskapazitäten $(T_{\ddot{U}b,kom}^{(DCT)}, T_{\ddot{U}b,geh}^{(DCT)})$ und der Wirkfaktoren $(b^{(i,j)})$ beinhalten.

In einigen Ausführungsformen umfasst das Berechnen der automatgetriebespezifischen Stellquantitäten das Berechnen der zu stellenden Kupplungskapazitäten $(T_{cap})$ der n Kupplungen und des zu stellenden Antriebsmoment $(T_{EM})$ der wenigstens einen weiteren Antriebseinheit in Abhängigkeit der Lastschaltkupplungskapazitäten $(T_{cap,kom}^{(AT)}, T_{cap,geh}^{(AT)})$ und/oder des Lastschaltmomentes $(T_{EM}^{(AT)})$ der wenigstens einen weiteren Antriebseinheit und/oder der Überanpressungskupplungskapazitäten $(T_{\ddot{U}b,kom}^{(AT)}, T_{\ddot{U}b,geh}^{(AT)})$ für die keine oder wenigstens eine kommende und die keine oder wenigstens eine gehende Kupplung und/oder der Überanpressungskupplungskapazitäten $(T_{\ddot{U}b,blb})$ der keinen oder wenigstens einen geschlossen bleibenden Kupplung und/oder der Schnittmomente $(T_{cut,blb})$ der m geschlossen bleibenden Kupplungen und/oder des Eingriffsmoments $(\Delta T_{in})$ der ersten und/oder der wenigstens einen weiteren Antriebseinheit und/oder des Eingriffsmoments $(\Delta T_{cl})$ der keinen oder wenigstens einen kommenden und/oder der keinen oder wenigstens einen gehenden und/oder der keinen oder wenigstens einen geschlossen bleibenden Kupplung und/oder des wenigstens einen Kompensationsmomentes $(\Delta T_{cl,komp})$ der keinen oder wenigstens einen kommenden und/oder der keinen oder wenigstens einen gehenden und/oder der keinen oder wenigstens einen offenen Kupplung und/oder des Kompensationsmomentes $(\Delta T_{EM,komp})$ der wenigstens einen weiteren Antriebseinheit. Vorzugsweise werden die tatsächlich zu stellenden Kupplungskapazitäten in Abhängigkeit möglichst vieler, besonders bevorzugt in Abhängigkeit aller genannten Alternativen bestimmt, wodurch ein besonders glatter Last- und Drehzahlübergang erreicht wird, weil die Vorsteuerung der (Kupplungs-) Kapazitäten möglichst exakt erfolgt, wodurch keine nachträgliche Regelung erforderlich oder im Aufwand minimiert ist und dabei die Regelgüte maximiert werden kann.

Schließlich erfolgt im letzten Schritt des erfindungsgemäßen Verfahrens das Umsetzen der wenigstens einen automatgetriebespezifischen Stellquantität durch wenigstens einen Aktuator und die wenigstens eine weitere Antriebseinheit. Dazu werden die Stellquantitäten bzw. Stellgrößen mittels geeigneter Mittel, z. B. über einen CAN-Bus, an die Aktoren und die wenigstens eine weitere Antriebseinheit, z. B. hydraulische Kupplungsstellzylinder und eine E-Maschine, gegebenenfalls unter Zwischenschaltung eines Getriebe- oder Hybridsteuergerätes (Hybridmanager), übertragen und durch diese umgesetzt.

In einer vorteilhaften Ausführungsform umfasst das Berechnen der Transformationsäquivalente alternativ oder zusätzlich das Berechnen von doppelkupplungsgetriebespezifisch maximal stellbaren Kupplungskapazitäten $\left(T_{cap,geh,max}^{(DCT)}, T_{cap,kom,max}^{(DCT)}\right)$ in Abhängigkeit der maximal übertragbaren Kupplungskapazitäten $(T_{cap,max})$ der n Kupplungen und/oder des minimal und/oder maximal verfügbaren Antriebsmomentes $(T_{in,min}, T_{in,max})$ der ersten und/oder der wenigstens einen weiteren Antriebseinheit, wobei die Basiskupplungskapazitäten $\left(T_{cap,kom}^{(DCT)}, T_{cap,geh}^{(DCT)}\right)$ zur Lastübernahme während des Schaltvorgangs für die kommende und die gehende Kupplung zusätzlich in Abhängigkeit der doppelkupplungsgetriebespezifisch maximal stellbaren Kupplungskapazitäten $\left(T_{cap,geh,max}^{(DCT)}, T_{cap,kom,max}^{(DCT)}\right)$ bestimmt werden. Die maximal übertragbare Kupplungskapazität ist durch die Eigenschaften der Kupplung gegeben. Die doppelkupplungsgetriebespezifisch maximal stellbaren Kupplungskapazitäten werden vorteilhafterweise sowohl in Abhängigkeit der Eigenschaften der Kupplung (maximal übertragbare Kupplungskapazität) als auch der aktuellen Parameter der ersten und/oder der wenigstens einen weiteren Antriebseinheit (minimal/maximal verfügbares Antriebsmoment) ermittelt. Die Ermittlung der Basiskupplungskapazitäten in Abhängigkeit der doppelkupplungsgetriebespezifisch maximal stellbaren Kupplungskapazitäten erhöht die Genauigkeit der Vorsteuerung wesentlich und ermöglicht die Berücksichtigung sämtlicher Betriebsbereiche bei der Lastschaltung von hybridisierten Automatikgetrieben. Weiterhin können die doppelkupplungsgetriebespezifisch maximal stellbaren Kupplungskapazitäten als Randbedingung rechnerisch mögliche aber praktisch nicht umsetzbare Sollwerte für zu stellende Kupplungskapazitäten verhindern.

In einer besonders vorteilhaften Ausführungsform umfasst das Auswählen der Transformationsfaktoren alternativ oder zusätzlich das Auswählen eines doppelkupplungsgetriebespezifisch minimal und/oder maximal realisierbaren Antriebsgradienten $\left(\dot{\omega}_{min}^{(DCT)}, \dot{\omega}_{max}^{(DCT)}\right)$ oder einer doppelkupplungsgetriebespezifisch minimal und/oder maximal realisierbaren Antriebsgradientenänderung $\left(\Delta\dot{\omega}_{min}^{(DCT)}, \Delta\dot{\omega}_{max}^{(DCT)}\right)$ in Abhängigkeit wenigstens einer Istgröße und/oder der maximal übertragbaren Kupplungskapazitäten $(T_{cap,max})$ der n Kupplungen und/oder des minimal und/oder maximal verfügbaren Antriebsmomentes $(T_{in,min}, T_{in,max})$ der ersten und/oder der wenigstens einen weiteren Antriebseinheit.

Dies hat wiederum den Vorteil, Reserven für zusätzliche Eingriffe, z. B. Kompensationseingriffe, vorzuhalten. Dabei kann anstelle der minimalen/maximalen Antriebsgradienten auch die minimale und/oder maximale Antriebsgradientenänderung verwendet werden.

## Ausführungsbeispiel

Weitere Merkmale, Anwendungsmöglichkeiten und Vorteile der Erfindung ergeben sich aus der nachfolgenden Beschreibung von Ausführungsbeispielen der Erfindung, die schematisch in den Figuren dargestellt sind.

Hierbei zeigen:

Figur 1a-b das Schema eines mittels einer E-Maschine hybridisierten Automatgetriebes (AT) anhand einer Getriebetopologie und einer Kupplungszustandstabelle,

Figur 2a-c eine schematische Gegenüberstellung von Kupplungskapazitäten eines Doppelkupplungsgetriebes (DKG), Kupplungskapazitäten und dem Antriebsmoment eines mit einer E-Maschine hybridisierten Automatgetriebes sowie eine vereinfacht dargestellte Drehzahlüberführung durch einen eCVT-Gang,

Figur 3a-c die Gegenüberstellung einer mit einer E-Maschine kompensierten und einer nicht kompensierten Lastschaltung,

Figur 4 die schematische Darstellung einer doppelkupplungsgetriebeäquivalenten Sicht eines beliebigen hybridisierten Automatgetriebes mit einer E-Maschine,

Figur 5 die schematische Darstellung einer doppelkupplungsgetriebeäquivalenten Sicht eines beliebigen hybridisierten Automatgetriebes, inklusive eines schaltbaren eCVT-Getriebes, mit zwei E-Maschinen und Ausgangsleistungsverzweigung (Output-Split) und

Figur 6 die schematische Darstellung einer doppelkupplungsgetriebeäquivalenten Sicht eines beliebigen hybridisierten Automatgetriebes, inklusive eines schaltbaren eCVT-Getriebes, mit zwei E-Maschinen und Eingangsleistungsverzweigung (Input-Split) oder zweifacher Leistungsverzweigung (Compound-Split).

Das Verfahren zur Lastschaltung von hybridisierten Automatgetrieben basiert auf Teilen des in der nicht vorveröffentlichten Patentanmeldung DE 10 2015 120 599.8 offenbarten Verfahrens zur Lastschaltung von Automatgetrieben. Im Vergleich dazu ist zusätzlich mindestens eine weitere Antriebsmaschine in Form einer E-Maschine an dem Gangwechsel, der auch den Betriebsartenwechsel des hybridisierten Automatgetriebes umfasst, beteiligt. Die E-Maschine entspricht aus Sicht der Getriebesteuerung bzw. Getrieberegelung einer Drehmomentquelle analog einer Kupplung, nur dass die Wirkrichtung zweiseitig sein kann.

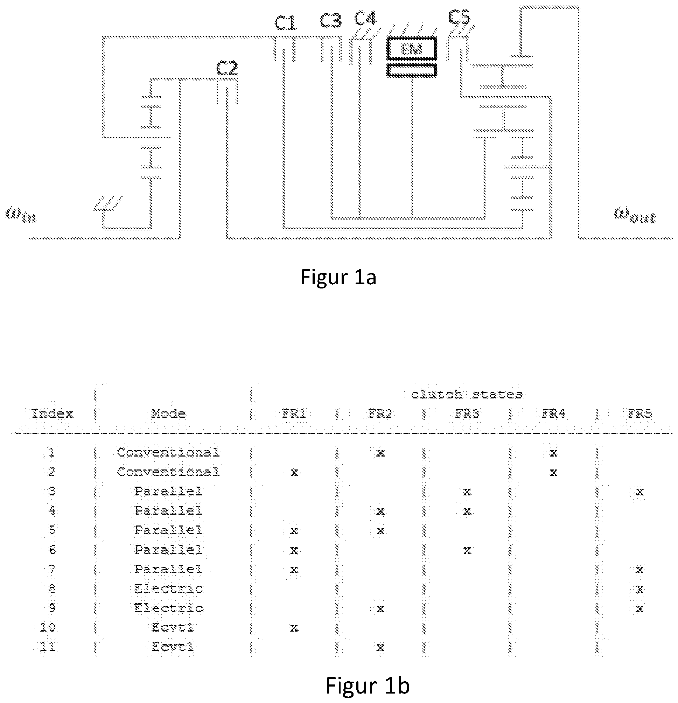

Mit einem hybridisierten Automatgetriebe, wie es in Figur 1a dargestellt ist, sind mehrere Betriebsarten darstellbar, z. B. elektrisches Fahren, verbrennungsmotorisches Fahren und hybridisches Fahren. Diese Betriebsarten entsprechen denen eines sogenannten Parallel-Hybrid-Fahrzeug. Figur 1a zeigt das Schema der Getriebetopologie eines Automatgetriebes nach Lepelletier mit einem einfachen Planetenradsatz, einem Ravigneaux-Radsatz, drei Kupplungen C1, C2 und C3, zwei Bremsen C4 und C5, welche im Folgenden ebenfalls als Kupplungen beschrieben und bezeichnet werden, sowie eine E-Maschine EM.

Figur 1b zeigt eine Kupplungszustandstabelle, die für jeden festen (conventional), jeden hybridisiert betriebenen (parallel), jeden rein elektrisch angetriebenen (electric) sowie jeden kontinuierlich variabel übersetzten Gang (eCVT) bestimmt, ob der Status (clutch states) der jeweiligen Kupplung (FR1 bis FR5) offen oder geschlossen (durch x gekennzeichnet) sein soll. Während eines Gangwechsels ergibt sich ein eCVT-Modus, bei dem die Übersetzung zwischen primärer Antriebsquelle, hier Verbrennungskraftmaschine, und Abtrieb durch die E-Maschine kontinuierlich variabel eingestellt werden kann und die Verbrennungskraftmaschine über die E-Maschine abgestützt wird. Gemäß Figur 1b ist im vorliegenden Beispiel für alle Gangwechsel, bei denen entweder die erste (FR1) oder die zweite Kupplung (FR2) geschlossen bleibt,ein eCVT-Modus realisierbar.

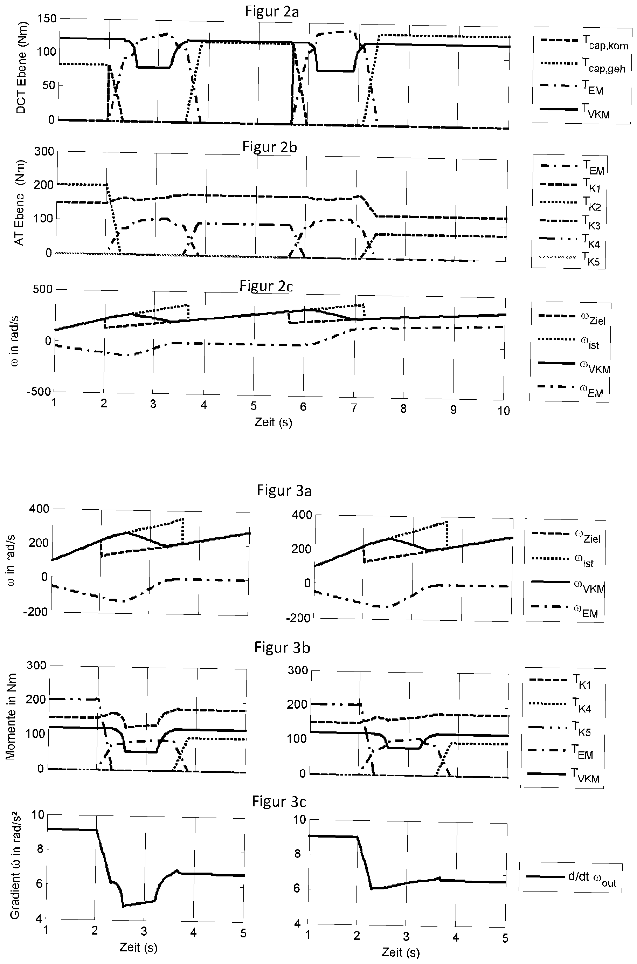

Figur 2 zeigt zwei Gangwechselvorgänge vom 1. Gang in den 2. Gang und vom 2. Gang in den 3. Gang. Wie in Figur 2b zu sehen ist, übernimmt die E-Maschine ($T_{EM}$) in der Drehzahlüberführung die Funktion der lasttragenden Kupplung im Schaltvorgang konventioneller Automatgetriebe. Je nach Schaltungstyp (Zug oder Schub) entspricht dies der kommenden oder der gehenden Kupplung. Während der Lastübernahme wird die noch lasttragende gehende Kupplung durch das Aufprägen eines Antriebsdrehmomentes mit der E-Maschine entlastet. Sobald die gehende Kupplung lastfrei ist, wird diese geöffnet. Der in diesem Moment erreichte Zustand entspricht einem eCVT-Gang. Wäre der Gangwechselvorgang zu diesem Zeitpunkt beendet, würde der eCVT1-Gang eingelegt sein, bei dem sich mit Änderung des aufgeprägten Antriebsdrehmomentes der Verbrennungskraftmaschine VKM und des abstützenden Antriebsmoment der E-Maschine EM die Übersetzung des Automatgetriebes stufenlos einstellen lässt. Die Drehzahlüberführung bzw. Einstellung der Drehzahl wird durch den eCVT-Gang in Abhängigkeit des durch den Lastschaltkern angewiesenen Drehzahlgradienten realisiert. Diese Phase ist zwischen Sekunde 2 und 4 (Gangwechselvorgang vom 1. Gang in den 2. Gang). Während dieser Zeit findet, wie bereits erwähnt, die Drehzahlüberführung statt, welche durch eine Reduktion des Antriebsmomentes ($T_{VKM}$) der ersten Antriebseinheit, also der Verbrennungskraftmaschine, umgesetzt wird. Auf der Ebene des Doppelkupplungsgetriebes ist das in Figur 2a zu sehen. Figur 2c zeigt schließlich die Drehzahlen des gehenden Gangs ($\omega_{ist}$), des kommenden Gangs ($\omega_{Ziel}$) sowie der Verbrennungskraftmaschine ($\omega_{VKM}$) und der E-Maschine ($\omega_{EM}$).

In Figur 3 ist die Gegenüberstellung von kompensierten und nicht kompensierten Gangwechseln zu sehen. Die Kompensation findet während der Drehzahlüberführung statt. Dabei wird die Drehzahl der Verbrennungskraftmaschine (VKM) im eCVT-Modus durch einen kombinierten VKM-EM-Eingriff auf die Drehzahl des Zielgangs überführt, wodurch der Abtriebsgradient $\dot\omega_{out}$ glatt gehalten werden kann. Die Kompensation eines Störmomentes wird in der nicht vorveröffentlichten Patentanmeldung DE 10 2015 120 601.3 dargestellt, wo auch die konkrete Bestimmung der einzelnen Antriebs- Eingriffs- und Kompensationsmomente beispielhaft erläutert ist. Konkret sind in Figur 3a die Drehzahlverläufe des aktuellen Gangs $\omega_{ist}$, des kommenden Ganges $\omega_{Ziel}$, der Verbrennungskraftmaschine $\omega_{VKM}$ sowie der E-Maschine $\omega_{EM}$ zu sehen. Diese sind sowohl bei einem kompensierten als auch bei einem nicht kompensierten Gangwechselvorgang identisch.

Die in Figur 3b dargestellten Drehmomentverläufe während eines Gangwechselvorganges von Gang 1 zu Gang 2 unterscheiden sich je nachdem, ob ein kompensierter Gangwechselvorgang (rechts) oder ein nicht kompensierter Gangwechselvorgang (links) vorliegt. Zu Sekunde 2 wird die Last $T_{K5}$ der gehenden Kupplung C5 auf die E-Maschine $T_{EM}$ übertragen. Nachdem die Lastübernahme durch die E-Maschine erfolgt ist, setzt eine Reduktion des Antriebsdrehmomentes $T_{in}$ der Verbrennungskraftmaschine ein (ca. Sekunde 2,3), um die Drehzahl der Verbrennungskraftmaschine $\omega_{VKM}$ wie in Figur 3a zu sehen, auf die neue Zielgangdrehzahl $\omega_{Ziel}$ zu überführen. Wegen der Kopplung zwischen Antrieb und Abtrieb über den geschlossen bleibenden Leistungspfad von Kupplung 1 reduziert sich das über diesen Leistungspfad an den Abtrieb übertragene Drehmoment $T_{K1}$ (vgl. ca. Sekunde 2,3 in Figur 3b links), was sich durch einen Gradienteneinbruch am Abtrieb $\dot\omega_{out}$ bemerkbar macht. Um diesen Einbruch zu kompensieren, erfolgt ein kombinierter Eingriff aus einer geringeren Antriebsdrehmomentreduktion $T_{in}$ und eines erhöhten Antriebsdrehmomentes $T_{EM}$ der E-Maschine (vgl. Figur 3b rechts), jeweils im Vergleich zum nicht kompensierten Gangwechselvorgang. Dadurch wird das über den geschlossen bleibenden Leistungspfad übertragene Drehmoment nahezu konstant gehalten und der Abtriebsgradient $\dot\omega_{out}$ bleibt nach einer notwendigerweise stattfindenden ersten Reduktion, hervorgerufen durch die sich ändernde Übersetzung in der Lastübernahme, ebenfalls nahezu konstant (vgl. Figur 3c rechts) und es erfolgt ein glatter und komfortabler Gangwechselvorgang ohne Zugkraftunterbrechung. Die Reduktion des Abtriebsgradienten kann durch die Anwendung des Radmomentenkonzeptes verhindert werden. Hierbei wird das Antriebsdrehmoment während der Lastübernahme entsprechend angehoben.

Sobald die Drehzahl der Verbrennungskraftmaschine $\omega_{VKM}$ an die Drehzahl des neuen, kommenden Ganges $\omega_{Ziel}$ angepasst ist, wird die Last von der E-Maschine an die kommende Kupplung C4 übertragen (vgl. Zeitraum Sekunde 3,5 bis ca. 3,8 in Figur 3b rechts).

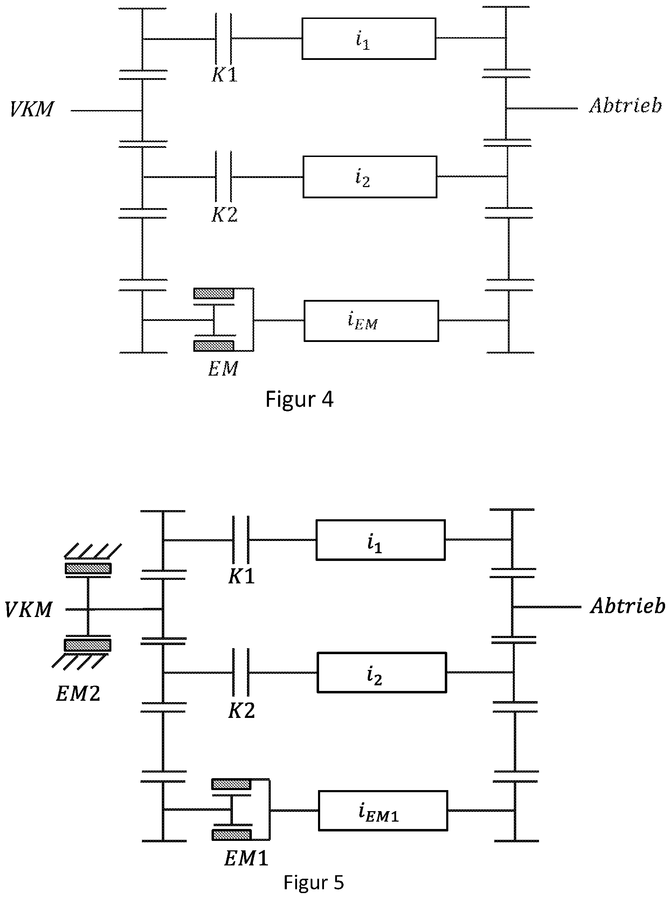

Wesentlich für das erfindungsgemäße Verfahren ist die Transformation der ermittelten bzw. anliegenden Istgrößen in doppelkupplungsgetriebespezifische Größen, genauer in die Transformationsäquivalente. Aus diesen Größen ermittelt der DCT-Lastschaltkern dann die DCT-spezifischen Stellgrößen, welche wiederum zurück transformiert werden in automatgetriebespezifische Stellgrößen. Um diese Transformation auch für hybridisierte Automatgetriebe anwenden zu können, muss die weitere Antriebseinheit, hier die E-Maschine EM, in eine doppelkupplungsgetriebeäquivalente Sicht transformiert werden. Eine derartige Sicht ist als Doppelkupplungsgetriebeschema in Figur 4 dargestellt. Dabei ist zu erkennen, dass die E-Maschine EM als weiteres parallel geschaltetes Teilgetriebe angenommen wird. Der Leistungsfluss erfolgt von der Verbrennungskraftmaschine VKM über eins der drei Teilgetriebe zum Abtrieb. Die beiden herkömmlichen Teilgetriebe verbinden über die Kupplungen K1 und K2 abwechselnd die Verbrennungskraftmaschine mit dem Abtrieb. Jedes dieser beiden Teilgetriebe weist dabei ein festes Übersetzungsverhältnis $i_1$ bzw. $i_2$ auf, was sich je nach eingelegter Gangstufe unterscheidet. Das Übersetzungsverhältnis wird als fest bezeichnet, weil die Kupplung im geschlossenen Zustand die VKM-Drehzahl fest an die die Übersetzung bildende Getriebeelement, z. B. Zahnräder, weiter gibt. Im Unterschied dazu kann die E-Maschine EM im dritten Teilgetriebe die Funktion einer Kupplung, also das Annähern und in Übereinstimmung Bringen der VKM-Drehzahl an die Drehzahl der Teilgetriebeeingangswelle, und die Funktion eines CVT-Getriebes abbilden. Dabei wird die Drehzahl der E-Maschine und damit die Relativdrehzahl zwischen VKM-Ausgangswelle und Teilgetriebeeingangswelle stufenlos verändert. Die Anwendung dieses einfachen Getriebeschemas für Automatgetriebe ist damit besonders vorteilhaft, weil unabhängig davon, wo die E-Maschine EM im Automatgetriebe angeordnet ist, die Anwendung des Getriebeschemas über die Transformationsfaktoren sichergestellt ist.

Die Berechnung der Stellgrößen erfolgt anhand eines Rad- bzw. Wunschmomentkonzeptes, das das über die Antriebsräder an die Fahrbahn zu übertragende Antriebsmoment als Wunschmoment anhand des Fahrerwunsches interpretiert, und/oder eines Kurbelwellenmomentkonzeptes. Bei konventionellen Getrieben kommt größtenteils das Kurbelwellenmomentkonzept zum Tragen. Dabei wird ein Antriebsmoment von der Verbrennungskraftmaschine VKM, das direkt auf die Kurbelwelle aufgebracht wird, vorgegeben. Dabei kann aber das Kurbelwellenmoment über die von der Getriebesteuerung bereitgestellte Übersetzung zwischen Antrieb und Abtrieb in das Radmoment umgerechnet werden. Auch beim Wechsel von einem Festgang in einen eCVT-Gang kann das Kurbelwellenmoment in das Radmoment umgerechnet werden, weil die Verbrennungskraftmaschine VKM im eCVT-Gang auch ein festes Momentenübersetzungsverhältnis zum Abtrieb aufweist. Somit ist die Anwendung der Erfindung immer auch als Radmomenten-basierte Steuerung möglich.

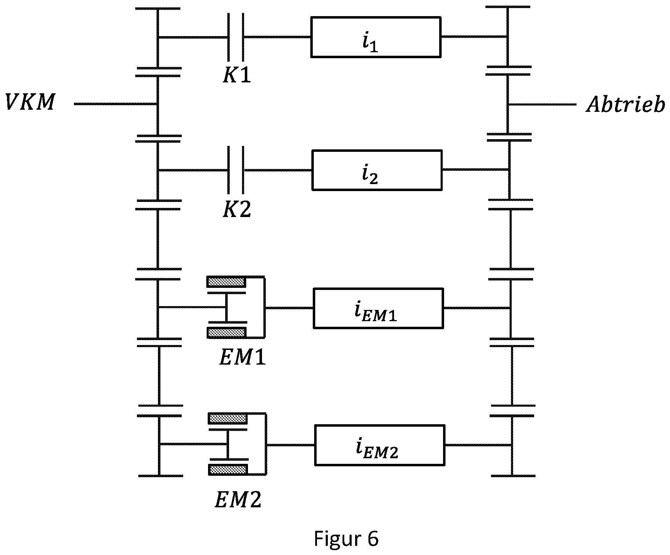

Hybridisierte Automatgetriebe können auch zwei oder mehr E-Maschinen aufweisen. In den Figuren 5 und 6 sind Varianten mit jeweils zwei E-Maschinen EM1, EM2 dargestellt. Figur 5 zeigt die doppelkupplungsgetriebeäquivalente, also die transformierte Sicht eines ausgangsleistungsverzweigten Automatgetriebes, auch als Output-Split bezeichnet. Dabei ist eine E-Maschine EM2 direkt mit der Kurbelwelle verbunden. Das wirkende Kurbelwellenmoment, bisher das Antriebsmoment der Verbrennungskraftmaschine VKM, ist dabei die Summe der Antriebsmomente der VKM und der E-Maschine EM2. Die andere E-Maschine EM1 stützt dieses Summenmoment ab, wodurch ein Drehmoment an den Abtrieb übertragen wird. Das Umschalten zwischen einem Festgang mit konstanter Übersetzung und einem eCVT-Modus mit veränderlicher Übersetzung erfolgt dabei wie oben beschrieben mit dem Unterschied, dass das Antriebswellenmoment aus zwei Quellenmomenten gebildet wird. Analog zu einem Fahrzeug mit Parallelhybridantrieb ergibt sich ein weiterer Freiheitsgrad in der Motor- und Getriebesteuerung durch die Verteilung des Summenmomentes auf die Verbrennungskraftmaschine VKM und die E-Maschine EM2.

Figur 6 zeigt die doppelkupplungsgetriebeäquivalente Sicht eines eingangsleistungsverzweigten und eines zweifach leistungsverzweigten Automatgetriebes. Beim an sich bekannten eingangsleistungsverzweigten Automatgetriebe, auch Input-Split genannt, wird die Verbrennungskraftmaschine VKM durch eine E-Maschine EM1 gestützt. Das heißt, dass die E-Maschine EM1 beispielsweise am Sonnenrad eines Planetengetriebes angreift und ein Drehmoment aufbringt, so dass die Verbrennungskraftmaschine VKM ein Drehmoment über beispielsweise den Planetenträger aufbringen kann, wodurch das Hohlrad ein gewünschtes und gezielt übersetztes Antriebsmoment an die Abtriebswelle abgeben kann. Im konventionellen Automatgetriebe ohne weitere Antriebseinheiten würde eine Kupplung bzw. eine Bremse das Sonnenrad gegen das Gehäuse abstützen. Das hier beschriebene Beispiel weist demgegenüber einen weiteren Freiheitsgrad auf, der durch einen eCVT-Modus anhand veränderlicher Drehzahlen der E-Maschine EM1 gekennzeichnet ist. Die zweite E-Maschine EM2 ist direkt mit dem Abtrieb gekoppelt. Durch die E-Maschine EM1 kann das Radsollmoment auf die E-Maschine EM2 am Abtrieb und die Verbrennungskraftmaschine VKM aufgeteilt werden. Das Umschalten zwischen einem Festgang mit konstanter Übersetzung und einem eCVT-Modus mit veränderlicher Übersetzung erfolgt dabei wie oben beschrieben mit dem Unterschied, dass die Höhe des Antriebsmomentes der Verbrennungskraftmaschine VKM bei gleichem Radsollmoment durch Aufbringen eines Antriebsmomentes durch die E-Maschine EM2 direkt auf den Abtrieb variiert werden kann. Dadurch sind Lastpunktverschiebungen der VKM und damit bessere Wirkungsgrade möglich. Zusätzlich ist es möglich, die E-Maschine EM2 am Abtrieb zur Kompensation von Störeinflüssen bei Drehzahlüberführungen während Umschalt- bzw. Gangwechselvorgängen einzusetzen.

Ein zweifach leistungsverzweigtes Automatgetriebe, auch Compound-Split genannt, weist wenigstens zwei Teilgetriebe, vorzugsweise zwei Planetenradgetriebe auf und ist vom Getriebeaufbau und der Getriebesteuerung deutlich komplexer als ein eingangsleistungsverzweigtes Automatgetriebe. Dennoch lässt es sich in derselben doppelkupplungsgetriebeäquivalenten Sicht darstellen wie letzteres, auch aufgrund der äquivalenten Behandlung von Kupplungen, Bremsen und, abhängig von der Gangwechselkombination, E-Maschinen als Kupplungsäquivalent mit zusätzlichen Freiheitsgraden in Betrag und Wirkrichtung. Dies verdeutlicht weiter die große Vorteilhaftigkeit des erfindungsgemäßen Verfahrens zur abtriebsneutralen Lastschaltung. Im Compound-Split bzw. zweifach verzweigten Automatgetriebe können beide E-Maschinen EM1 und EM2 zur Abstützung der Verbrennungskraftmaschine VKM verwendet werden. Dadurch kann das von den weiteren Antriebseinheiten aufgebrachte Drehmoment in Abhängigkeit des Sollradmomentes und des Antriebsmomentes der Verbrennungskraftmaschine VKM auf die beiden E-Maschinen aufgeteilt werden. Zusätzlich gibt es einen weiteren Freiheitsgrad dadurch, dass das Drehmoment zum Abstützen der Verbrennungskraftmaschine VKM auf beide E-Maschinen verteilt werden kann. Diese zusätzlichen Freiheitsgrade erlauben sowohl eine effizientere konstruktive Auslegung des gesamten Antriebsstranges als auch eine Lastpunktverschiebung der einzelnen Antriebeinheiten in Richtung (globalem) Betriebsoptimum. Der Umschaltvorgang zwischen einzelnen Festgängen oder zwischen einem Festgang und einem eCVT-Modus erfolgt wie oben beschrieben mit dem Unterschied, dass zur Überführung der Last beide E-Maschinen genutzt werden können. Je nach verwendeter E-Maschine zum Umschalten in den eCVT-Modus bzw. je nach verwendeter Kombination beider E-Maschinen ergibt sich ein unterschiedliches Übersetzungsverhältnis zwischen Verbrennungsmotor und Abtrieb in Abhängigkeit von Stützfaktoren der E-Maschinen.

**Patentansprüche**

1. Verfahren zur abtriebsneutralen Lastschaltung von hybridisierten Automatgetrieben mit einer beliebigen Anzahl Gangstufen und einer Anzahl n Kupplungen und mit einer ersten von p Antriebseinheiten und wenigstens einer weiteren von p Antriebseinheiten anhand einer Transformation realer Getriebegrößen des hybridisierten Automatgetriebes in virtuelle Größen eines Doppelkupplungsgetriebes mit dazugehörigen doppelkupplungsgetriebespezifischen Basisschaltungen umfassend folgende Schritte:

- Auslösen eines Schaltvorgangs für eine Gangwechselpaarung (i,j) von einem Gang i mit einer Istübersetzung ($\gamma_i$) zu einem Gang j mit einer Zielübersetzung ($\gamma_j$) in Abhängigkeit einer Zielgangvorgabe,
- Erfassen von Istgrößen des hybridisierten Automatgetriebes und der ersten und der wenigstens einen weiteren Antriebseinheit, wobei die Istgrößen wenigstens eine der folgenden Größen umfassen:

  o eine Antriebswellendrehzahl ($\omega_{in}$) wenigstens einer Antriebswelle des hybridisierten Automatgetriebes,
  o eine Abtriebswellendrehzahl ($\omega_{out}$) einer Abtriebswelle des hybridisierten Automatgetriebes,
  o ein von der ersten und/oder der wenigstens einen weiteren Antriebseinheit zur Verfügung gestelltes und an der wenigstens einen Antriebswelle des hybridisierten Automatgetriebes anliegendes Antriebsmoment ($T_{in}$),
  o aktuell gestellte Kupplungskapazitäten ($T_{cap}$) der n Kupplungen und/oder
  o ein minimal und/oder maximal verfügbares Antriebsmoment ($T_{in,min}$, $T_{in,max}$) der ersten und/oder der wenigstens einen weiteren Antriebseinheit,

- Auswählen von wenigstens einem Transformationsfaktor in Abhängigkeit wenigstens einer Istgröße und der Gangwechselpaarung (i,j) aus Zustandstabellen,
- Berechnen von wenigstens einem Transformationsäquivalent für die Berechnung von wenigstens einer doppelkupplungsgetriebespezifischen Stellquantität durch die Basisschaltung des Doppelkupplungsgetriebes in Abhängigkeit wenigstens einer Istgröße und/oder des wenigstens einen Transformationsfaktors,
- Berechnen von wenigstens einer doppelkupplungsgetriebespezifischen Stellquantität durch eine Basisschaltung in Abhängigkeit wenigstens einer Istgröße und/oder des wenigstens einen Transformationsfaktors und/oder des wenigstens einen Transformationsäquivalents,
- Berechnen von wenigstens einer automatgetriebespezifischen Stellquantität in Abhängigkeit wenigstens einer Istgröße und/oder des wenigstens einen Transformationsfaktors und/oder des wenigstens einen Transformationsäquivalents und/oder der wenigstens einen doppelkupplungsgetriebespezifischen Stellquantität und

- Umsetzen der wenigstens einen automatgetriebespezifischen Stellquantität durch wenigstens einen Aktuator und die wenigstens eine weitere Antriebseinheit.

2. Verfahren zur Lastschaltung von hybridisierten Automatgetrieben nach Anspruch 1, wobei das Auswählen der Transformationsfaktoren wenigstens einen der folgenden Schritte umfasst:

- Auswählen von die Automatgetriebetopologie bestimmenden Koeffizienten ($a^{(i,j)}$) in Abhängigkeit der Gangwechselpaarung (i,j) aus einer Zustandstabelle,
- Auswählen von Wirkfaktoren ($b^{(i,j)}$) von zu stellenden Kupplungskapazitäten ($T_{cap}$) der n Kupplungen und von einem von der wenigstens einen weiteren Antriebseinheit abgegebenen Antriebsmoment ($T_{EM}$) in Abhängigkeit der Gangwechselpaarung (i,j) aus einer Zustandstabelle,
- Indizieren ($idx^{(i,j)}$) der keinen oder wenigstens einen kommenden $\left(idx_{kom}^{(i,j)}\right)$ und der keinen oder wenigstens einen gehenden $\left(idx_{geh}^{(i,j)}\right)$ und der keinen oder wenigstens einen geschlossen bleibenden $\left(idx_{blb}^{(i,j)}\right)$ Kupplung der n Kupplungen und des Status $\left(idx_{EM}^{(i,j)}\right)$ der wenigstens einen weiteren Antriebseinheit in Abhängigkeit der Gangwechselpaarung (i,j) und/oder der gewählten Betriebsart aus einer Zustandstabelle,
- Auswählen von einem gangwechselpaarungsabhängigen Antriebsmassenträgheitsmoment $\left(J_{in}^{(i,j)}\right)$ des hybridisierten Automatgetriebes und einem gangwechselpaarungsabhängigen Abtriebsmassenträgheitsmoment $\left(J_{out}^{(i,j)}\right)$ des hybridisierten Automatgetriebes in Abhängigkeit der Gangwechselpaarung (i,j) aus einer Zustandstabelle,
- Auswählen von Koeffizienten ($c^{(i,j)}$) zur Bestimmung von Schnittmomenten ($T_{cut,blb}$) für die m geschlossen bleibenden Kupplungen und zur Bestimmung eines Haltemomentes ($T_{cut,EM}$) der wenigstens einen weiteren Antriebseinheit in Abhängigkeit der Gangwechselpaarung (i,j) aus einer Zustandstabelle und/oder
- Auswählen von maximal übertragbaren Kupplungskapazitäten ($T_{cap,max}$) der n Kupplungen in Abhängigkeit wenigstens einer Istgröße,

- Auswählen eines doppelkupplungsgetriebespezifisch minimal und/oder maximal realisierbaren Antriebsgradienten $\left(\dot{\omega}_{min}^{(DCT)},\dot{\omega}_{max}^{(DCT)}\right)$ oder einer doppelkupplungsgetriebespezifisch minimal und/oder maximal realisierbaren Antriebsgradientenänderung $\left(\Delta\dot{\omega}_{min}^{(DCT)},\Delta\dot{\omega}_{max}^{(DCT)}\right)$ in Abhängigkeit wenigstens einer Istgröße und/oder der maximal übertragbaren Kupplungskapazitäten ($T_{cap,max}$) der n Kupplungen und/oder des minimal und/oder maximal verfügbaren Antriebsmomentes ($T_{in,min}$, $T_{in,max}$) der ersten und/oder der wenigstens einen weiteren Antriebseinheit umfasst,

wobei das Berechnen des wenigstens einen Transformationsäquivalentes wenigstens einen der folgenden Schritte umfasst:

- Berechnen eines äquivalenten Antriebsmassenträgheitsmomentes $\left(J_{in}^{(DCT)}\right)$ in Abhängigkeit des gangwechselpaarungsabhängigen Antriebsmassenträgheitsmomentes $\left(J_{in}^{(i,j)}\right)$ und des gangwechselpaarungsabhängigen Abtriebsmassenträgheitsmomentes $\left(J_{out}^{(i,j)}\right)$ und eines Drehzahlverhältnisses ($\omega_{out}/\omega_{in}$) der Abtriebswellendrehzahl ($\omega_{out}$) und der Antriebswellendrehzahl ($\omega_{in}$) und der Koeffizienten ($a^{(i,j)}$),
- Berechnen von doppelkupplungsgetriebespezifischen Eingangswellendrehzahlen $\left(\omega_{in}^{(i)}\right)$ und $\left(\omega_{in}^{(j)}\right)$ in Abhängigkeit der Gangwechselpaarung (i,j) und der Abtriebswellendrehzahl ($\omega_{out}$) sowie der Istübersetzung ($\gamma_i$) und der Zielübersetzung ($\gamma_j$),
- Berechnen von Wirkrichtungen der Schnittmomente ($T_{cut,blb}$) für die m geschlossen bleibenden Kupplungen in Abhängigkeit der Gangwechselpaarung (i,j) und der Kupplungsdrehzahlen $\left(\omega_{in}^{(i,j)}\right)$ und $\left(\omega_{out}^{(i,j)}\right)$ der n Kupplungen,
- Berechnen von wirkrichtungsangepassten Koeffizienten ($\tilde{c}^{(i,j)}$) in Abhängigkeit der berechneten Wirkrichtungen der Schnittmomente ($T_{cut,blb}$) und der Koeffizienten ($c^{(i,j)}$) zur Bestimmung der Schnittmomente ($T_{cut,blb}$) für die m geschlossen bleibenden Kupplungen,
- Berechnen der Schnittmomente ($T_{cut,blb}$) an den m geschlossen bleibenden Kupplungen und des Haltemomentes ($T_{cut,EM}$) der wenigstens einen weiteren Antriebseinheit in Abhängigkeit der wirkrichtungsangepassten Koeffizienten ($\tilde{c}^{(i,j)}$) und des Antriebsmoments ($T_{in}$) der ersten und der wenigstens einen weiteren Antriebseinheit und der aktuell gestellten Kupplungskapazitäten ($T_{cap}$) der n Kupplungen und des aktuellen Abtriebsgradienten $\omega_{out}$) und des aktuell von der wenigstens einen weiteren Antriebseinheit zur Verfügung gestellten und an einem Element des hybridisierten Automatgetriebes anliegenden Antriebsmoment ($T_{EM}$) und/oder
- Berechnen eines doppelkupplungsgetriebespezifischen Überanpressungsfaktors $\left(k_{\ddot{U}b,scale}^{(DCT)}\right)$ und/oder eines doppelkupplungsgetriebespezifischen Überanpressungsoffsetwertes $\left(k_{\ddot{U}b,offset}^{(DCT)}\right)$ in Abhängigkeit der Gangwechselpaarung (i,j) und der Wirkfaktoren ($b^{(i,j)}$) und in Abhängigkeit von globalen Skalierungsfaktoren oder kupplungsindividuellen Skalierungsfaktoren und/oder globalen Offsetwerten oder kupplungsindividuellen Offsetwerten der n Kupplungen und/oder
- Berechnen von doppelkupplungsgetriebespezifisch maximal stellbaren Kupplungskapazitäten $\left(T_{cap,geh,max}^{(DCT)}, T_{cap,kom,max}^{(DCT)}\right)$ in Abhängigkeit der maximal übertragbaren Kupplungskapazitäten ($T_{cap,max}$) der n Kupplungen und/oder des minimal und/oder maximal verfügbaren Antriebsmomentes ($T_{in,min}, T_{in,max}$) der ersten und/oder der wenigstens einen weiteren Antriebseinheit umfasst, wobei die Basiskupplungskapazitäten $\left(T_{cap,kom}^{(DCT)}, T_{cap,geh}^{(DCT)}\right)$ zur Lastübernahme während des Schaltvorgangs für die kommende und die gehende Kupplung zusätzlich in Abhängigkeit der doppelkupplungsgetriebespezifisch maximal stellbaren Kupplungskapazitäten $\left(T_{cap,geh,max}^{(DCT)}, T_{cap,kom,max}^{(DCT)}\right)$ bestimmt werden.

3. Verfahren zur Lastschaltung von hybridisierten Automatgetrieben nach einem der vorhergehenden Ansprüche, wobei die wenigstens eine doppelkupplungsgetriebespezifische Stellquantität wenigstens eine der folgenden Größen umfasst:

- einen relativen Antriebsgradienten ($\Delta\dot{\omega}_{VKM}$) und/oder ein relatives Antriebsmoment ($\Delta T_{VKM}$) der ersten Antriebseinheit zur Drehzahlüberführung,
- Basiskupplungskapazitäten $\left(T_{cap,kom}^{(DCT)}, T_{cap,geh}^{(DCT)}\right)$ zur Lastübernahme während des Schaltvorgangs für die kommende und die gehende Kupplung, wobei die Basiskupplungskapazitäten $\left(T_{cap,kom}^{(DCT)}, T_{cap,geh}^{(DCT)}\right)$ durch Bewertung mit der jeweiligen Wirkrichtung in Basiskupplungsmomente $\left(T_{cl,kom,nom}^{(DCT)}, T_{cl,geh,nom}^{(DCT)}\right)$ umgerechnet werden können und/oder
- Basisüberanpressungskupplungskapazitäten $\left(T_{\ddot{U}b,kom}^{(DCT)}, T_{\ddot{U}b,geh}^{(DCT)}\right)$ zur Überanpressungssteuerung für die kommende und gehende Kupplung in Abhängigkeit des doppelkupplungsgetriebespezifischen Überanpressungsfaktors $\left(k_{\ddot{U}b,scale}^{(DCT)}\right)$ und/oder des doppelkupplungsgetriebespezifischen Überanpressungsoffsetwertes $\left(k_{\ddot{U}b,offset}^{(DCT)}\right)$ und/oder
- ein doppelkupplungsgetriebespezifisches Lastschaltmoment $\left(T_{EM}^{(DCT)}\right)$ wenigstens einer weiteren doppelkupplungsgetriebeäquivalenten Antriebseinheit.

4. Verfahren zur Lastschaltung von hybridisierten Automatgetrieben nach einem der vorhergehenden Ansprüche, wobei das Berechnen der automatgetriebespezifischen Stellquantitäten wenigstens einen der folgenden Schritte umfasst:

- Berechnen von Lastschaltkupplungskapazitäten $\left(T_{cap,kom}^{(AT)}, T_{cap,geh}^{(AT)}\right)$ für die kommende und gehende Kupplung und Berechnen von einem Lastschaltmoment $\left(T_{EM}^{(AT)}\right)$ der wenigstens einen weiteren Antriebseinheit in Abhängigkeit der Basiskupplungskapazitäten $\left(T_{cap,kom}^{(DCT)}, T_{cap,geh}^{(DCT)}\right)$ und der Wirkfaktoren ($b^{(i,j)}$) und des doppelkupplungsgetriebespezifischen Lastschaltmomentes $\left(T_{EM}^{(DCT)}\right)$ der wenigstens einen weiteren doppelkupplungsgetriebeäquivalenten Antriebseinheit zur Lastübernahme,

- Berechnen eines Eingriffsmomentes ($\Delta T_{in}$) der ersten und/oder der wenigstens einen weiteren Antriebseinheit und/oder wenigstens eines Eingriffsmomentes ($\Delta T_{cl}$) der keinen oder wenigstens einen kommenden und/oder der keinen oder wenigstens einen gehenden und/oder der keinen oder wenigstens einen geschlossen bleibenden Kupplung in Abhängigkeit der Gangwechselpaarung (i,j) und des relativen Antriebsgradienten ($\Delta\omega_{VKM}$) und/oder des relativen Antriebsmoment ($\Delta T_{VKM}$) der ersten Antriebseinheit zur Drehzahlüberführung,

- Berechnen wenigstens eines Kompensationsmomentes ($\Delta T_{cl,komp}$) der keinen oder wenigstens einen kommenden und/oder der keinen oder wenigstens einen gehenden und/oder der keinen oder wenigstens einen offenen Kupplung und/oder eines Kompensationsmomentes ($\Delta T_{EM,komp}$) der wenigstens einen weiteren Antriebseinheit in Abhängigkeit des Eingriffsmomentes ($\Delta T_{in}$) der ersten und/oder der wenigstens einen weiteren Antriebseinheit und/oder des wenigstens einen Eingriffsmomentes ($\Delta T_{cl}$) der keinen oder wenigstens einen kommenden und/oder der keinen oder wenigstens einen gehenden und/oder der keinen oder wenigstens einen geschlossenen Kupplung und/oder des Abtriebsgradienten $\dot\omega_{out}$) und/oder der Koeffizienten $\left(a_{out}^{(i,j)}, a_{in}^{(i,j)}\right)$ und/oder des gangwechselpaarungsabhängigen Abtriebsmassenträgheitsmomentes $\left(J_{out}^{(i,j)}\right)$,

- Berechnen von Überanpressungskupplungskapazitäten ($T_{Üb,blb}$) der keinen oder wenigstens einen geschlossen bleibenden Kupplung in Abhängigkeit der Schnittmomente ($T_{cut,blb}$) für die m geschlossen bleibenden Kupplungen und der globalen Skalierungsfaktoren oder kupplungsindividuellen Skalierungsfaktoren und/oder der globalen Offsetwerte oder kupplungsindividuellen Offsetwerte der n Kupplungen,

- Berechnen von Überanpressungskupplungskapazitäten $\left(T_{Üb,kom}^{(AT)}, T_{Üb,geh}^{(AT)}\right)$ der wenigstens einen kommenden und der wenigstens einen gehenden Kupplung in Abhängigkeit der Basisüberanpressungskupplungskapazitäten $\left(T_{Üb,kom}^{(DCT)}, T_{Üb,geh}^{(DCT)}\right)$ und der Wirkfaktoren ($b^{(i,j)}$),

- Berechnen der zu stellenden Kupplungskapazitäten ($T_{cap}$) der n Kupplungen und des zu stellenden Antriebsmoment ($T_{EM}$) der wenigstens einen weiteren Antriebseinheit in Abhängigkeit der Lastschaltkupplungskapazitäten $\left(T_{cap,kom}^{(AT)}, T_{cap,geh}^{(AT)}\right)$ und/oder des Lastschaltmomentes $\left(T_{EM}^{(AT)}\right)$ der wenigstens einen weiteren Antriebseinheit und/oder der Überanpressungskupplungskapazitäten $\left(T_{Üb,kom}^{(AT)}, T_{Üb,geh}^{(AT)}\right)$ für die keine oder wenigstens eine kommende und die keine oder wenigstens eine gehende Kupplung und/oder der Überanpressungskupplungskapazitäten ($T_{Üb,blb}$) der keinen oder wenigstens einen geschlossen bleibenden Kupplung und/oder der Schnittmomente ($T_{cut,blb}$) der m geschlossen bleibenden Kupplungen und/oder des Eingriffsmoments ($\Delta T_{in}$) der ersten und/oder der wenigstens einen weiteren Antriebseinheit und/oder des wenigstens einen Eingriffsmomentes ($\Delta T_{cl}$) der keinen oder wenigstens einen kommenden und/oder der keinen oder wenigstens einen gehenden und/oder der keinen oder wenigstens einen geschlossenen bleibenden Kupplung und/oder des wenigstens einen Kompensationsmomentes ($\Delta T_{cl,komp}$) der keinen oder wenigstens einen kommenden und/oder der keinen oder wenigstens einen gehenden und/oder der keinen oder wenigstens einen offenen Kupplung und/oder des Kompensationsmomentes ($\Delta T_{EM,komp}$) der wenigstens einen weiteren Antriebseinheit.

## Claims

1. Method for output-neutral load switching of hybridized automatic transmissions with an arbitrary number of gears and a number n of clutches and with a first of p drive units and at least one further of p drive units on the basis of a transformation of real transmission variables of the hybridized automatic transmission to virtual variables of a dual-clutch transmission with associated dual-clutch-transmission-specific basic shifting modes comprising the following steps:

    - initiation of a shifting process for a gear-change pair (i, j) from a gear i with an actual gear ratio ($\gamma_i$) to a gear j with a target gear ratio ($\gamma_j$) in dependence on a target gear preselection,
    - sensing of actual variables of the hybridized automatic transmission and of the first and of the at least one further drive unit, wherein the actual variables comprise at least one of the following variables:

○ a drive shaft rpm ($\omega_{in}$) of at least one drive shaft of the hybridized automatic transmission,
○ an output shaft rpm ($\omega_{out}$) of an output shaft of the hybridized automatic transmission,
○ a drive torque ($T_{in}$) made available by the first and/or by the at least one further drive unit and present at the at least one drive shaft of the hybridized automatic transmission,
○ currently set clutch capacities ($T_{cap}$) of the n clutches and/or
○ a minimally and/or maximally available drive torque ($T_{in,min}$, $T_{in,max}$) of the first and/or of the at least one further drive unit,

- selection of at least one transformation factor in dependence on at least one actual variable and on the gear-change pair (i, j) from tables of states,
- calculation of at least one transformation equivalent for the calculation of at least one dual-clutch-transmission-specific actuating quantity by the basic shifting mode of the dual-clutch transmission in dependence on at least one actual variable and/or on the at least one transformation factor,
- calculation of at least one dual-clutch-transmission-specific actuating quantity by a basic shifting mode in dependence on at least one actual variable and/or on the at least one transformation factor and/or on the at least one transformation equivalent,
- calculation of at least one automatic-transmission-specific actuating quantity in dependence on at least one actual variable and/or on the at least one transformation factor and/or on the at least one transformation equivalent and/or on the at least one dual-clutch-transmission-specific actuating quantity and
- implementation of the at least one automatic-transmission-specific actuating quantity by at least one actuator and by the at least one further drive unit.

2. Method for load switching of hybridized automatic transmissions according to claim 1, wherein the selection of the transformation factors comprises at least one of the following steps:

- selection of coefficients ($a^{(i,j)}$) determining the automatic-transmission topology in dependence on the gear-change pair (i, j) from a table of states.

- selection of effective factors ($b^{(i,j)}$) of clutch capacities ($T_{cap}$), to be set, of the n clutches and of a drive torque ($T_{EM}$) delivered by one of the at least one further drive units in dependence on the gear-change pair (i, j) from a table of states,
- indexing ($idx^{(i,j)}$) of the none or at least one oncoming ($idx^{(i,j),kom}$) and of the none or at least one off-going ($idx^{(i,j),geh}$) clutch and of the none or at least one clutch that remains closed ($idx^{(i,j),blb}$) of the n clutches and of the status ($idx^{(i,j),EM}$) of the at least one further drive unit in dependence on the gear-change pair (i, j) and/or on the selected mode of operation from a table of states,
- selection of a gear-change-pair-dependent drive mass moment of inertia ($J^{(i,j),in}$) of the hybridized automatic transmission and of a gear-change-pair-dependent output mass moment of inertia ($J^{(i,j),out}$) of the hybridized automatic transmission in dependence on the gear-change pair (i,j) from a table of states,
- selection of coefficients ($c^{(i,j)}$) for determination of cutting torques ($T_{cut,blb}$) for the m clutches that remain closed and for determination of a holding torque ($T_{cut,EM}$) of the at least one further drive units in dependence on the gear-change pair (i, j) from a table of states,
- selection of maximally transmittable clutch capacities ($T_{cap,max}$) of the n clutches in dependence on at least one actual variable and/or
- selection of a dual-clutch-transmission-specific minimally and/or maximally realizable drive gradient ($\dot{\omega},^{(DCT),min}$, $\dot{\omega},^{(DCT),max}$) or a dual-clutch-transmission-specific minimally and/or maximally realizable drive-gradient change ($\Delta\dot{\omega},^{(DCT),min}$, $\Delta\dot{\omega},^{(DCT),max}$) in dependence on at least one actual variable and/or on the maximally transmittable clutch capacities ($T_{cap,max}$) of the n clutches and/or on the minimally and/or maximally available drive torque ($T_{in,min}$, $T_{in,max}$) of the first and/or of the at least one further drive unit,

wherein the calculation of the at least one transformation equivalent comprises at least one of the following steps:

- calculation of an equivalent drive mass moment of inertia ($J^{(DCT),in}$) in dependence on the gear-change-pair-dependent drive mass moment of inertia ($J^{(i,j),in}$) and on the gear-change-pair-dependent output mass moment of inertia ($J^{(i,j),out}$) and on an rpm ratio ($\omega_{out}/\omega_{in}$) of the output shaft rpm ($\omega_{out}$) and on the drive shaft rpm ($\omega_{in}$) and on the coefficients ($a^{(i,j)}$),
- calculation of dual-clutch-transmission-specific input-shaft rpms ($\omega^{(i),in}$) and ($\omega^{(j,in}$) in depend-

ence on the gear-change pair (i, j) and on the output-shaft rpm ($\omega_{out}$) as well as on the actual gear ratio ($\gamma_i$) and on the target gear ratio ($\gamma_j$),

- calculation of effective directions of the cutting torques ($T_{cut,blb}$) for the m clutches that remain closed in dependence on the gear-change pair (i, j) and on the clutch rpms ($\omega^{(i,j),in}$) and ($\omega^{(i,i),out}$) of the n clutches,

- calculation of effective-direction-adapted coefficients ($\tilde{c}^{(i,j)}$) in dependence on the calculated effective directions of the cutting torques ($T_{cut,blb}$) and on the coefficients ($c^{(i,j)}$) for determination of the cutting torques ($T_{cut,blb}$) for the m clutches that remain closed,

- calculation of the cutting torques ($T_{cut,blb}$) on the m clutches that remain closed and of the holding torque ($T_{cut,EM}$) of the at least one further drive unit in dependence on the effective-direction-adapted coefficients ($\tilde{c}^{(i,j)}$) and on the drive torque ($T_{in}$) and of the first and of the at least one further drive unit and on the currently set clutch capacities ($T_{cap}$) of the n clutches and on the current output gradient ($\dot{\omega}_{out}$) and on the drive torque ($T_{EM}$) currently made available by the at least one further drive unit and present at an element of the hybridized automatic transmission and/or

- calculation of a dual-clutch-transmission-specific extra-contact-pressure factor $(k^{(DCT)}_{\ddot{U}b,scale})$ and/or on a dual-clutch-transmission-specific extra-contact-pressure offset value $(k^{(DCT)}_{\ddot{U}b,offset})$ in dependence on the gear-change pair (i, j) and on the effective factors ($b^{(i,j)}$) and in dependence on global scaling factors or clutch-individual scaling factors and/or global offset values or clutch-individual offset values of the n clutches and/or

- calculation of dual-clutch-transmission-specific maximally settable clutch capacities $(T^{(DCT)}_{cap,geh,max}, (T^{(DCT)}_{cap,kom,max})$ in dependence on the maximally transmittable clutch capacities ($T_{cap,max}$) of the n clutches and/or on the minimally and/or maximally available drive torques ($T_{in,min}$, $T_{in,max}$) of the first and/or of the at least one further drive unit, wherein the basic clutch capacities $(T^{(DCT)}_{cap,kom}, (T^{(DCT)}_{cap,geh})$ for load acceptance during the shifting process for the on-coming and the off-going clutch are additionally determined in dependence on the dual-clutch-transmission-specific maximally settable clutch capacities $(T^{(DCT)}_{cap,geh,max}, (T^{(DCT)}_{cap,kom,max})$.

3. Method for load switching of hybridized automatic transmissions according to one of the preceding claims, wherein the at least one dual-clutch-transmission-specific actuating quantity comprises one of the following variables:

- a relative drive gradient ($\Delta\dot{\omega}_{VKM}$) and/or a relative drive torque ($\Delta T_{VKM}$) of the first drive unit for rpm transfer,
- basic-clutch capacities $(T^{(DCT)}_{cap,kom}, (T^{(DCT)}_{cap,geh})$ for load acceptance during the shifting process for the on-coming and off-going clutch, wherein the basic-clutch capacities $(T^{(DCT)}_{cap,kom}, (T^{(DCT)}_{cap,geh})$ can be mathematically converted by evaluation with the respective effective direction to basic-clutch torques $(T^{(DCT)}_{cl,kom,nom}, (T^{(DCT)}_{cl,geh,nom})$ and/or
- basic extra-contact-pressure clutch capacities $(T^{(DCT)}_{\ddot{U}b,kom}, T^{(DCT)}_{\ddot{U}b,geh})$ for extra-contact-pressure control for the on-coming and off-going clutch in dependence on the dual-clutch-transmission-specific extra-contact-pressure factor $(k^{(DCT)}_{\ddot{U}b,scale})$ and/or on the dual-clutch-transmission-specific extra-contact-pressure offset value $(k^{(DCT)}_{\ddot{U}b,offset})$ and/or
- a dual-clutch-transmission-specific load-switching torque ($T^{(DCT),EM}$) of at least one further dual-clutch-transmission-equivalent drive unit.

4. Method for load switching of hybridized automatic transmissions according to one of the preceding claims, wherein the calculation of the automatic-transmission-specific actuating quantities comprises at least one of the following steps:

- calculation of load-switching clutch capacities $(T^{(AT)}_{cap,kom}, (T^{(AT)}_{cap,geh})$ for the on-coming and off-going clutch and calculation of a load-switching torque ($T^{(AT),EM}$) of the at least one further drive unit in dependence on the basic clutch capacities $(T_{cap,kom}^{(DCT)}, \quad T_{cap,geh}^{(DCT)})$ and on the effective factors ($b^{(i,j)}$) and on the dual-clutch-transmission-specific load-switching torque $(T_{EM}^{(DCT)})$ of the at least one further dual-clutch-transmission-equivalent drive unit for load acceptance,

- calculation of an engagement torque ($\Delta T_{in}$) of the first and/or of the at least one further drive unit and/or at least one engagement torque ($\Delta T_{cl}$) of the none or at least one on-coming and/or of the none or at least one off-going clutch and/or of the none or at least one clutch that remains closed in dependence on the gear-change pair (i, j) and on the relative drive gradients ($\Delta\dot\omega_{VKM}$) and/or on the relative drive torque ($\Delta T_{VKM}$) of the first drive for rpm transfer.

- calculation at least of a compensating torque ($\Delta T_{cl,komp}$) of the none or at least one on-coming and/or of the none or at least one off-going and/or of the none or at least one open clutch and/or on a compensating torque ($\Delta T_{EM,komp}$) of the at least one further drive unit in dependence on the engagement torque ($\Delta T_{in}$) of the first and/or of the at least one further drive unit and/or on the at least one engagement torque ($\Delta T_{cl}$) of the none or at least one on-coming and/or of the none or at least one off-going and/or of the none or at least one closed clutch and/or on the output gradient ($\dot\omega_{out}$) and/or on the coefficients ($a^{(i,j),out}, a^{(i,j),in}$) and/or on the gear-change-pair-dependent output mass moment of inertia ($J^{(i,j),out}$),

- calculation of extra-contact-pressure clutch capacities ($T_{Üb,blb}$) of the none or at least one clutch that remains closed in dependence on the cutting torques ($T_{cut,blb}$) for the m clutches that remain closed and on the global scaling factor or clutch-individual scaling factors and/or on the global offset values or clutch-individual offset values of the n clutches,

- calculation of extra-contact-pressure clutch capacities $(T_{Üb,kom}^{(AT)}, (T_{Üb,geh}^{(AT)})$ of the at least one on-coming and of the at least one off-going clutch in dependence on the basic extra-contact-pressure clutch capacities $(T_{Üb,kom}^{(DCT)}, (T_{Üb,geh}^{(DCT)})$ and on the effective factors ($b^{(i,j)}$),

- calculation of the clutch capacities ($T_{cap}$) to be set for the n clutches and of the drive torque ($T_{EM}$) to be set for the at least one further drive unit in dependence on the load-switching clutch capacities $(T_{cap,kom}^{(AT)}, (T_{cap,geh}^{(AT)})$ and/or on the load-switching torque $(T_{EM}^{(AT)})$ of the at least one further drive unit and/or on the extra-contact-pressure clutch capacities $(T_{Üb,kom}^{(AT)}, (T_{Üb,geh}^{(AT)})$ for the none or at least one on-coming and the none or at least one off-going clutch and/or on the extra-contact-pressure clutch capacities ($T_{Üb,blb}$) of the none or at least one clutch that remains closed and/or on the cutting torques ($T_{cut,blb}$) of the m clutches that remain closed and/or on the engagement torque ($\Delta T_{in}$) of the first and/or of the at least one further drive unit and/or on the at least one engagement torque ($\Delta T_{cl}$) of the none or at least one on-coming and/or of the none or at least one off-going clutch and/or of the none or at least one clutch that remains closed and/or on the at least one compensating torque ($\Delta T_{cl,komp}$) of the none or at least one on-coming and/or of the none or at least one off-going and/or of the none or at least one open clutch and/or on the compensation torque ($\Delta T_{EM,komp}$) of the at least one further drive unit.

**Revendications**

1. Procédé pour la commande sous charge, neutre en sortie, de boîtes de vitesses automatiques hybrides avec un nombre quelconque de rapports de vitesse et un nombre n d'embrayages et avec une première de p unités d'entraînement et au moins une autre de p unités d'entraînement à l'aide d'une transformation de grandeurs de transmission réelles de la boîte de vitesses automatique hybride en grandeurs virtuelles d'une boîte de vitesses à double embrayage avec des connexions en base commune associées, spécifiques à une boîte de vitesses à double embrayage, comprenant les étapes suivantes consistant à :

- déclencher une opération de changement de vitesse pour une paire de changements de rapport (i,j) d'un rapport i ayant un rapport de transmission réel ($\gamma_i$) à un rapport j ayant un rapport de transmission cible ($\gamma_j$) en fonction d'une consigne de rapport cible,
- détecter des grandeurs réelles de la boîte de vitesses automatique hybride et de la première et de ladite au moins une autre unité d'entraînement, les grandeurs réelles comprenant au moins l'une des grandeurs suivantes :

∘ une vitesse de rotation d'arbre d'entraînement ($\omega_{in}$) d'au moins un arbre d'entraînement de la boîte de vitesses automatique hybride,

∘ une vitesse de rotation d'arbre de sortie ($\omega_{out}$) d'un arbre de sortie de la boîte de vitesses automatique hybride,

∘ un couple d'entraînement ($T_{in}$) fourni par la première et/ou ladite au moins une autre unité d'entraînement et appliqué audit au moins un arbre d'entraînement de la boîte de vitesses automatique hybride,

∘ des capacités d'accouplement disponibles actuellement ($T_{cap}$) des n embrayages, et/ou

∘ un couple d'entraînement (Tin,min, Tin,max) disponible au minimum et/ou au maximum de la première et/ou de ladite au moins une autre unité d'entraînement,

- sélectionner au moins un facteur de transformation en fonction d'au moins une grandeur réelle et de la paire de changements de rapport (i,j) dans des tables d'état,
- calculer au moins un équivalent de transformation pour le calcul d'au moins une quantité de réglage spécifique à une boîte de vitesses à double embrayage par la connexion en mode commun de la boîte de vitesses à double embrayage en fonction d'au moins une grandeur réelle et/ou de l'au moins un facteur de transformation,
- calculer au moins une quantité de réglage spécifique à une boîte de vitesses à double embrayage par une connexion en mode commun en fonction d'au moins une grandeur réelle et/ou de l'au moins un facteur de transformation et/ou de l'au moins un équivalent de transformation,
- calculer au moins une quantité de réglage spécifique à une boîte de vitesses automatique en fonction d'au moins une grandeur réelle et/ou de l'au moins un facteur de transformation et/ou de l'au moins un équivalent de transformation et/ou de ladite au moins une quantité de réglage spécifique à une boîte de vitesses à double embrayage, et
- mettre en œuvre ladite au moins une quantité de réglage spécifique à une boîte de vitesses automatique par au moins un actionneur et ladite au moins une autre unité d'entraînement.

2. Procédé de commande sous charge de boîtes de vitesses automatiques hybrides selon la revendication 1, dans lequel la sélection du facteur de transformation comprend au moins l'une des étapes suivantes :

- sélectionner des coefficients ($a^{(i,j)}$) déterminant la topologie de boîte de vitesses automatique en fonction de la paire de changements de rapport (i,j) dans une table d'état,
- sélectionner des facteurs d'efficience ($b^{(i,j)}$) de capacités d'accouplement ($T_{cap}$) à mettre à disposition des n embrayages et un couple d'entraînement ($T_{EM}$) sorti par ladite au moins une autre unité d'entraînement en fonction de la paire de changements de rapport (i,j) dans une table d'état,
- indexer ($idx^{(i,j)}$) le zéro ou au moins un embrayage entrant $\left(idx_{kom}^{i,j}\right)$ et le zéro ou au moins un embrayage sortant $\left(idx_{geh}^{i,j}\right)$ et le zéro ou au moins un embrayage restant fermé $\left(idx_{blb}^{i,j}\right)$ des n embrayages et le statut $\left(idx_{EM}^{i,j}\right)$ de ladite au moins une autre unité d'entraînement en fonction de la paire de changements de rapport (i,j) et/ou du mode de fonctionnement sélectionné dans une table d'état,
- sélectionner un moment d'inertie d'entraînement dépendant de la paire de changements de rapport $\left(J_{in}^{i,j}\right)$ de la boîte de vitesses automatique hybride et un moment d'inertie de sortie dépendant de la paire de changements de rapport $\left(J_{out}^{i,j}\right)$ de la boîte de vitesses automatique hybride en fonction de la paire de changements de rapport (i,j) dans une table d'état,
- sélectionner des coefficients ($c^{(i,j)}$) pour déterminer des moments d'intersection ($T_{cut,blb}$) pour les m embrayages restants fermés et pour déterminer un couple de maintien ($T_{cut,EM}$) de ladite au moins une autre unité d'entraînement en fonction de la paire de changements de rapport (i,j) dans une table d'état, et/ou
- sélectionner des capacités d'accouplement ($T_{cap,max}$) transmissibles au maximum des n embrayages en fonction d'au moins une grandeur réelle,
- comprend sélectionner un gradient d'entraînement $\left(\dot{\omega}_{min}^{(DCT)}, \dot{\omega}_{max}^{(DCT)}\right)$ réalisable au minimum et/ou au maximum, spécifique à une boîte de vitesses à double embrayage, ou un changement de gradient d'entraînement $\left(\Delta\dot{\omega}_{min}^{(DCT)}, \Delta\dot{\omega}_{max}^{(DCT)}\right)$ réalisable au minimum et/ou au maximum, spécifique à une boîte de vitesses à double embrayage, en fonction d'au moins une grandeur réelle et/ou des capacités d'accouplement ($T_{cap,max}$) transmissibles au maximum des n embrayages et/ou du couple d'entraînement ($T_{in,min}$, $T_{in,max}$) disponible au minimum et/ou au maximum de la première et/ou de ladite au moins une autre unité d'entraînement,

dans lequel le calcul de l'au moins un équivalent de transformation comprend au moins l'une des étapes suivantes :

- calculer un moment d'inertie d'entraînement équivalent $\left(J_{in}^{(DCT)}\right)$ en fonction du moment d'inertie d'entraînement $\left(J_{in}^{i,j}\right)$ dépendant de la paire de changements de rapport et du moment d'inertie de sortie $\left(J_{out}^{i,j}\right)$ dépendant de la paire de changements de rapport et d'un rapport de vitesse de rotation ($\omega_{out}/\omega_{in}$) de la vitesse de rotation d'arbre de sortie ($\omega_{out}$) et de la vitesse de rotation d'arbre d'entraînement ($\omega_{in}$) et des coefficients ($a^{(i,j)}$),
- calculer des vitesses de rotation d'arbre d'entrée $\left(\omega_{in}^{(i)}\right)$ et $\left(\omega_{in}^{(j)}\right)$ spécifiques à une boîte de vitesses à double embrayage en fonction de la paire de changements de rapport (i,j) et de la vitesse de rotation d'arbre de sortie ($\omega_{out}$) ainsi que du rapport de transmission réel ($\gamma_i$) et du rapport de transmission cible ($\gamma_j$),
- calculer des directions effectives des moments d'intersection ($T_{cut,blb}$) pour les m embrayages restants fermés en fonction de la paire de changements de rapport (i,j) et des vitesses de rotation d'embrayage $\left(\omega_{in}^{(i,j)}\right)$ et $\left(\omega_{out}^{(i,j)}\right)$ des n embrayages,
- calculer des coefficients adaptés en direction effective ($\tilde{c}^{(i,j)}$) en fonction des directions effectives calculées des moments d'intersection ($T_{cut,blb}$) et des coefficients ($c^{(i,j)}$) pour déterminer les moments d'intersection ($T_{cut,blb}$) pour les m embrayages restants fermés,
- calculer les moments d'intersection ($T_{cut,blb}$) au niveau des m embrayages restants fermés et le couple de maintien ($T_{cut,EM}$) de ladite au moins une autre unité d'entraînement en fonction des coefficients adaptés en direction effective ($\tilde{c}^{(i,j)}$) et du couple d'entraînement ($T_{in}$) de la première et de ladite au moins une autre unité d'entraînement et des capacités d'accouplement ($T_{cap}$) actuellement disponibles des n embrayages et du gradient de sortie actuel ($\dot{\omega}_{out}$) et du couple d'entraînement ($T_{EM}$) mis à disposition actuellement par ladite au moins une autre unité d'entraînement et appliqué à un élément de la boîte de vitesses automatique hybride, et/ou
- calculer un facteur de surpression de contact $\left(k_{Üb,scale}^{(DCT)}\right)$ spécifique à une boîte de vitesses à double embrayage et/ou une valeur de décalage de surpression de contact $\left(k_{Üb,offset}^{(DCT)}\right)$ spécifique à une boîte de vitesses à double embrayage en fonction de la paire de changements de rapport (i,j) et des facteurs d'efficience ($b^{(i,j)}$) et en fonction de facteurs de mise à l'échelle globaux ou de facteurs de mise à l'échelle individuels par embrayage et/ou de valeurs de décalage globales ou de valeurs de décalage individuelles par embrayage des n embrayages, et/ou
- calculer des capacités d'accouplement $\left(T_{cap,geh,max}^{(DCT)}, T_{cap,kom,max}^{(DCT)}\right)$ pouvant être mises à disposition au maximum spécifiquement pour une boîte de vitesses à double embrayage en fonction des capacités d'accouplement ($T_{cap,max}$) transmissibles au maximum des n embrayages et/ou du couple d'entraînement ($T_{in,min}$, $T_{in,max}$) disponible au minimum et/ou au maximum de la première et/ou de ladite au moins une autre unité d'entraînement, dans lequel les capacités d'accouplement de base $\left(T_{cap,kom}^{(DCT)}, T_{cap,geh}^{(DCT)}\right)$ sont déterminées pour la reprise de charge pendant l'opération de changement de vitesse pour l'embrayage entrant et l'embrayage sortant de plus en fonction des capacités d'accouplement $\left(T_{cap,geh,max}^{(DCT)}, T_{cap,kom,max}^{(DCT)}\right)$ pouvant être mises à disposition au maximum spécifiquement pour une boîte de vitesses à double embrayage.

3. Procédé de commande sous charge de boîtes de vitesses automatiques hybrides selon l'une quelconque des revendications précédentes, dans lequel ladite au moins une quantité de réglage spécifique à une boîte de vitesses à double embrayage comprend au moins l'une des grandeurs suivantes :

- un gradient d'entraînement relatif ($\Delta\dot{\omega}_{VKM}$) et/ou un couple d'entraînement relatif ($\Delta T_{VKM}$) de la première unité d'entraînement pour le transfert de vitesse de rotation,
- des capacités d'accouplement de base $\left(T_{cap,kom}^{(DCT)}, T_{cap,geh}^{(DCT)}\right)$ pour la reprise de charge pendant l'opération de changement de vitesse pour l'embrayage entrant et l'embrayage sortant, dans lequel les capacités d'accouplement de base $\left(T_{cap,kom}^{(DCT)}, T_{cap,geh}^{(DCT)}\right)$ peuvent être converties par une évaluation avec la direction effective respective en couples d'embrayage de base $\left(T_{cl,kom,nom}^{(DCT)}, T_{cl,geh,nom}^{(DCT)}\right)$, et/ou
- des capacités d'accouplement de surpression de contact de base $\left(T_{Üb,kom}^{(DCT)}, T_{Üb,geh}^{(DCT)}\right)$ pour la commande de surpression de contact pour l'embrayage entrant et l'embrayage sortant en fonction du facteur de surpression de contact $\left(k_{Üb,scale}^{(DCT)}\right)$ spécifique à une boîte de vitesses à double embrayage et/ou de la valeur de décalage de surpression de contact $\left(k_{Üb,offset}^{(DCT)}\right)$ spécifique à une boîte de vitesses à double embrayage, et/ou
- un couple de commande sous charge $\left(T_{EM}^{(DCT)}\right)$ spécifique à une boîte de vitesses à double embrayage d'au moins une autre unité d'entraînement équivalente à une boîte de vitesses à double embrayage.

4. Procédé de commande sous charge de boîtes de vitesses automatiques hybrides selon l'une quelconque des revendications précédentes, dans lequel le calcul des quantités de réglage spécifiques à une boîte de vitesses automatique comprend au moins l'une des étapes suivantes :

- calculer des capacités d'accouplement de commande sous charge $\left(T_{cap,kom}^{(AT)}, T_{cap,geh}^{(AT)}\right)$ pour l'embrayage entrant et l'embrayage sortant, et calculer un couple de commande sous charge $\left(T_{EM}^{(AT)}\right)$ de ladite au moins une autre unité d'entraînement en fonction des capacités d'accouplement de base $\left(T_{cap,kom}^{(DCT)}, T_{cap,geh}^{(DCT)}\right)$ et des facteurs d'efficience ($b^{(i,j)}$) et du couple de commande sous charge $\left(T_{EM}^{(DCT)}\right)$ spécifique à une boîte de vitesses à double embrayage de ladite au moins une autre unité d'entraînement, équivalente à une boîte de vitesses à double embrayage, pour la reprise de charge,
- calculer un couple d'enclenchement ($\Delta T_{in}$) de la première et/ou de ladite au moins une autre unité d'entraînement et/ou au moins un couple d'enclenchement ($\Delta T_{cl}$) du zéro ou au moins un embrayage entrant et/ou du zéro ou au moins un embrayage sortant et/ou du zéro ou au moins un embrayage restant fermé en fonction de la paire de changements de rapport (i,j) et du gradient d'entraînement relatif ($\Delta\dot{\omega}_{VKM}$) et/ou du couple d'entraînement relatif ($\Delta T_{VKM}$) de la première unité d'entraînement pour le transfert de vitesse de rotation,
- calculer au moins un couple de compensation ($\Delta T_{cl,komp}$) du zéro ou au moins un embrayage entrant et/ou du zéro ou au moins un embrayage sortant et/ou du zéro ou au moins un embrayage ouvert et/ou un couple de compensation ($\Delta T_{EM,komp}$) de ladite au moins une autre unité d'entraînement en fonction du couple d'enclenchement ($\Delta T_{in}$) de la première et/ou de ladite au moins une autre unité d'entraînement et/ou dudit moins un couple d'enclenchement ($\Delta T_{cl}$) du zéro ou au moins un embrayage entrant et/ou du zéro ou au moins un embrayage sortant et/ou du zéro ou au moins un embrayage fermé et/ou du gradient de sortie ($\dot{\omega}_{out}$) et/ou des coefficients $\left(a_{out}^{(i,j)}, a_{in}^{(i,j)}\right)$ et/ou du moment d'inertie de sortie $\left(J_{out}^{(i,j)}\right)$ dépendant de la paire de changements de rapport,
- calculer des capacités d'accouplement de surpression de contact ($T_{Üb,blb}$) du zéro ou au moins un embrayage restant fermé en fonction des moments d'intersection ($T_{cut,blb}$) pour les m embrayages restants fermés et des facteurs de mise à l'échelle globaux ou des facteurs de mise à l'échelle individuels par embrayage et/ou des valeurs de décalage globales ou des valeurs de décalage individuelles par embrayage des n embrayages,
- calculer des capacités d'accouplement de surpression de contact $\left(T_{Üb,kom}^{(AT)}, T_{Üb,geh}^{(AT)}\right)$ de l'au moins un embrayage entrant et de l'au moins un embrayage sortant en fonction des capacités d'accouplement de surpression de contact de base $\left(T_{\text{Üb},kom}^{(DCT)}, T_{\text{Üb},geh}^{(DCT)}\right)$ et des facteurs d'efficience (b$^{(i,j)}$),

- calculer les capacités d'accouplement ($T_{cap}$) à mettre à disposition des n embrayages et le couple d'entraînement ($T_{EM}$) à mettre à disposition de ladite au moins une autre unité d'entraînement en fonction des capacités d'accouplement de commande sous charge $\left(T_{cap,kom}^{(AT)}, T_{cap,geh}^{(AT)}\right)$ et/ou du couple de commande sous charge $\left(T_{EM}^{(AT)}\right)$ de ladite au moins une autre unité d'entraînement et/ou des capacités d'accouplement de surpression de contact $\left(T_{\text{Üb},kom}^{(AT)}, T_{\text{Üb},geh}^{(AT)}\right)$ pour le zéro ou au moins un embrayage entrant et le zéro ou au moins un embrayage sortant et/ou des capacités d'accouplement de surpression de contact ($T_{\text{Üb},blb}$) du zéro ou au moins un embrayage restant fermé et/ou des moments d'intersection ($T_{cut,blb}$) des m embrayages restants fermés et/ou du couple d'enclenchement ($\Delta T_{in}$) de la première et/ou de ladite au moins une autre unité d'entraînement et/ou de l'au moins un couple d'enclenchement ($\Delta T_{cl}$) du zéro ou au moins un embrayage entrant et/ou du zéro ou au moins un embrayage sortant et/ou du zéro ou au moins un embrayage restant fermé et/ou de l'au moins un couple de compensation ($\Delta T_{cl,komp}$) du zéro ou au moins un embrayage entrant et/ou du zéro ou au moins un embrayage sortant et/ou du zéro ou au moins un embrayage ouvert et/ou du couple de compensation ($\Delta T_{EM,komp}$) de ladite au moins une autre unité d'entraînement.

Figur 1a

| Index | Mode | clutch states | | | | |
|---|---|---|---|---|---|---|
| | | FR1 | FR2 | FR3 | FR4 | FR5 |
| 1 | Conventional | | x | | x | |
| 2 | Conventional | x | | | x | |
| 3 | Parallel | | | x | | x |
| 4 | Parallel | | x | x | | |
| 5 | Parallel | x | x | | | |
| 6 | Parallel | x | | x | | |
| 7 | Parallel | x | | | | x |
| 8 | Electric | | | | | x |
| 9 | Electric | | x | | | x |
| 10 | Ecvt1 | x | | | | |
| 11 | Ecvt1 | | x | | | |

Figur 1b

Figur 2a

Figur 2b

Figur 2c

Figur 3a

Figur 3b

Figur 3c

Figur 4

Figur 5

$i_1$

$K1$

$VKM$ — Abtrieb

$i_2$

$K2$

$i_{EM1}$

$EM1$

$i_{EM2}$

$EM2$

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007033497 A1
- DE 102007032789 A1
- DE 10153722 A1
- DE 10014879 B4
- DE 19639376 C1
- EP 1497576 B1
- DE 10138998 A1
- EP 1108164 B4
- DE 102008008460 A1
- DE 102015120599
- WO 2009024162 A1
- EP 1744083 A
- DE 102015120601